# EUROPEAN PATENT SPECIFICATION

(11) **EP 3 038 318 B1**
(45) Date of publication and mention of the grant of the patent: **18.07.2018**
(21) Application number: 15191850.5
(22) Date of filing: 28.10.2015
(51) Int. Cl.: H04L 29/06, H04L 9/32, H04L 12/46, H04L 12/40

(54) **COMMUNICATION CONTROL APPARATUS, COMMUNICATION CONTROL METHOD AND COMMUNICATION CONTROL PROGRAM**
KOMMUNIKATIONSSTEUERUNGSVORRICHTUNG, KOMMUNIKATIONSSTEUERUNGSVERFAHREN UND KOMMUNIKATIONSSTEUERUNGSPROGRAMM
APPAREIL DE CONTRÔLE DE COMMUNICATION, PROCÉDÉ DE CONTRÔLE DE COMMUNICATION ET PROGRAMME DE CONTRÔLE DE COMMUNICATION

(30) Priority: 27.12.2014 JP 2014266836
(43) Date of publication of application: 29.06.2016
(73) Proprietor: FUJITSU LIMITED, Kawasaki-shi, Kanagawa 211-8588 (JP)
(72) Inventor: Yajima, Jun, Kanagawa, 211-8588 (JP); Hasebe, Takayuki, Kanagawa, 211-8588 (JP); Takenaka, Masahiko, Kanagawa, 211-8588 (JP)
(74) Representative: Hoffmann Eitle

(56) References cited:
- EP-A1- 2 775 660
- US-A1- 2014 301 550
- Bogdan Groza ET AL: "LiBrA-CAN: A Lightweight Broadcast Authentication Protocol for Controller Area Networks" In: "Correct System Design", 1 January 2012 (2012-01-01), Springer International Publishing, Cham 032548, XP055234780, ISSN: 0302-9743 ISBN: 978-3-642-27256-1 vol. 7712, pages 185-200, DOI: 10.1007/978-3-642-35404-5_15, * Sections 2.2-2.5; Constructions 2, 3; figure 3 *

## Description

### FIELD

The embodiments discussed herein are related to a control of a communication among communication devices.

### BACKGROUND

A network technique called a CAN (Controller Area Network) is sometimes used to transmit and receive data and control information between devices that are used in an in-vehicle network of an automobile, factory automation or the like. A system using a CAN includes a plurality of ECUs (Electronic Control Units). ECUs communicate with each other by transmitting and receiving a frame. In a CAN, a frame used for a communication includes identification information (ID) used to identify the frame. Moreover, each of the ECUs prestores the ID of a received frame. A frame is broadcast, and each of the ECUs receives a frame including an ID that is set to be received by an ECU. However, each of the ECUs ignores a frame including an ID that is set not to be received.

An association between an ID used in a frame and an ECU is not entirely standardized, and which ECU is set to receive which ID is not disclosed. However, an attacker can make an association between a transmitted frame and a process executed in a system by intercepting frames transmitted and received in a CAN, and by observing processes executed in the system using the CAN. The attacker can store frames transmitted in the past and the obtained association between frames and processes executed in the system. The attacker can transmit, to the network, a frame associated with a behavior desired to be invoked for the system using the CAN. Then, the frame transmitted from the attacker causes an automobile or an automation factory to execute an improper process. In the following description, such an attack is sometimes referred to as a "replay attack" or a "retransmission attack".

An authentication method using a message authentication code (MAC) generated from data, an ID and a counter value corresponding to the ID is proposed to prevent a replay attack. Here, the counter value is a value obtained by counting the number of times that a message is transmitted for each ID of a frame in each ECU. A device at a transmission source transmits, to a device at a destination, a main message including data to be transmitted, and a MAC message for making a notification of a MAC generated by using the main message. The device that has received the main message and the MAC message generates a MAC from the main message, and determines whether the main message has validity by judging whether the generated MAC and a MAC within the MAC message match.

Documents such as Japanese Laid-open Patent Publication No. 2013-98719 and the like are known.

When each device within a CAN system verifies a MAC each time the device has received a frame including data, all the devices within the system generate a counter value, calculate a MAC, and make a comparison between a MAC calculated from the frame and a MAC for which notification has been made. Accordingly, loads imposed on the devices on a reception side increase.

Document Bogdan Groza ET AL, "LiBrA-CAN: A Lightweight Broadcast Authentication Protocol for Controller Area Networks", Correct System Design, Cham, Springer International Publishing, vol. 7712, pages 185 - 200, describes a lightweight broadcast authentication protocol for controller area networks. The method uses a protocol based entirely on simple symmetric primitives using 2 procedures called key splitting and MAC mixing. Instead of achieving authentication independently for each node, authentication keys are split between groups of multiple nodes. Further method authentication codes are amalgamated using systems of linear equations.

Document EP 2 775 660 A1 describes each of ECUs counting the number of messages transmitted for each of CAN IDs. A transmission node that has transmitted a main message produces an MAC from a data field and the CAN ID in the main message and a counter value corresponding to the CAN ID, and transmits the MAC as an MAC message. A reception node that has received the main message produces an MAC from the data field and the CAN ID contained in the main message and the counter value corresponding to the CAN ID, and determines whether the MAC matches the MAC contained in the MAC message. By so doing, verification whether the main message is valid or not can be made. According to this configuration, message authentication by the MAC can be made without changing a CAN protocol.

Document US 2014/301550 A1 describes a method for data transmission between a sensor and an electronic control and/or regulating unit (ECU), the transmitted sensor data and the sensor being secured against a manipulation. The system provides a secure method for manipulation protection, the sensor data being transmitted via a first logical data transmission channel at a first data transmission rate, and security data (MAC; CMAC) for securing the transmitted sensor data and/or the sensor being transmitted via a second logical data transmission channel at a second data transmission rate from the sensor to the ECU.; At least once at the beginning of a data transmission session, a session key is transmitted from the ECU to the sensor via a third logical data transmission channel and received by the latter, the session key being used at least for the ongoing session to generate the security data.

### SUMMARY

The present invention aimed at detecting a replay attack without increasing
loads on the devices that receive frames is defined by the independent claims. According to an aspect of the embodiments, a communication control apparatus includes a receiver and a controller.

The receiver receives, from a first node, data including first identification information or second identification information. The controller generates a first authentication code by using first data when the receiver has received the first data including the first identification information. The receiver receives, from the first node, second data including the second identification information and a second authentication code that the first node has generated by using the first data. The controller decides whether to make a second node abort a processing of data reported using the first identification information, on the basis of a result of a comparison between the first authentication code and the second authentication code.

### BRIEF DESCRIPTION OF DRAWINGS

FIG. 1 is a sequence diagram for explaining an example of a control method according to an embodiment.
FIG. 2 illustrates an example of a configuration of a communication control apparatus.
FIG. 3 illustrates an example of a MAC table.
FIG. 4 illustrates an example of a configuration of a transmission node.
FIG. 5 illustrates an example of a hardware configuration.
FIG. 6 illustrates examples of formats of a transmitted or received frame.
FIG. 7 is an explanatory diagram of an example of a network to which a first embodiment is applied.
FIG. 8 is a sequence diagram illustrating an example of a method for setting an initial value of a counter value.
FIG. 9 is an explanatory diagram of an example of a MAC generation method.
FIG. 10 is a sequence diagram for explaining an example of a control method in the first embodiment.
FIG. 11 is a flowchart for explaining an example of a process executed by a communication control apparatus in the first embodiment.
FIG. 12 is an explanatory diagram of a network.
FIG. 13 is an explanatory diagram of examples of a network and a frame to which a second embodiment is applied.
FIG. 14A is a sequence diagram for explaining an example of a control method in the second embodiment.
FIG. 14B is a sequence diagram for explaining the example of the control method in the second embodiment.
FIG. 15 is a flowchart for explaining an example of a process executed by a communication control apparatus in the second embodiment.
FIG. 16 is an explanatory diagram of an example of an authentication code generation method.
FIG. 17 illustrates an example of an authentication code table.
FIG. 18 is a sequence diagram for explaining an example of a control method in a third embodiment.
FIG. 19 is a flowchart for explaining an example of a process executed by a communication control apparatus in the third embodiment.

### DESCRIPTION OF EMBODIMENTS

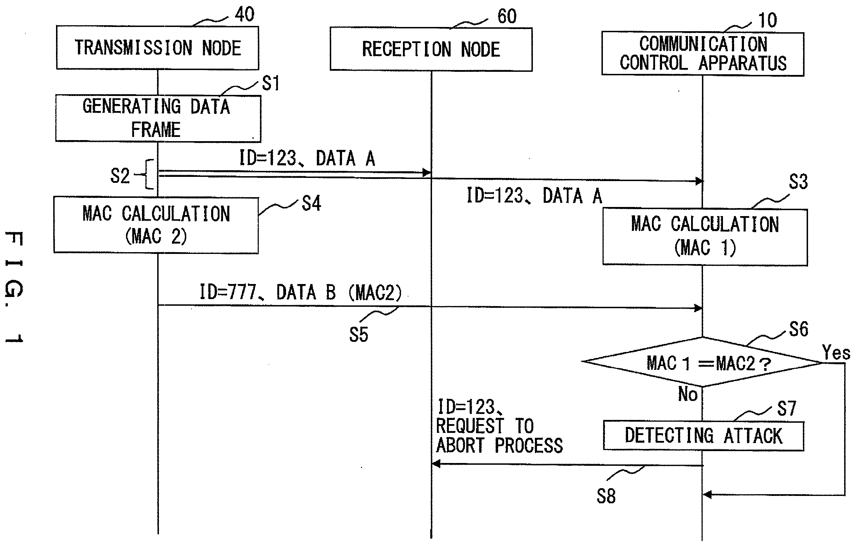

FIG. 1 is a sequence diagram for explaining an example of a control method according to an embodiment. FIG. 1 illustrates an example of a process executed when one communication control apparatus 10, one transmission node 40 and one reception node 60 are installed in a CAN network. However, the number of transmission nodes 40 and the number of reception nodes 60 within the system are arbitrary. In the following description, a device that transmits a frame (data frame) including data used in a process executed in the system is referred to as a "transmission node". In the meantime, a device that receives a data frame, executes a process for operating the system by executing a process based on data within the data frame, and does not execute a process for detecting a replay attack is referred to as a "reception node" 60.

The transmission node 40 uses a first ID when the transmission node 40 transmits data addressed to the reception node 60, and also uses a second ID that is not received by the reception node 60 when the transmission node 40 communicates with the communication control apparatus 10. The communication control apparatus 10 recognizes both the first ID and the second ID as reception targets. In the example illustrated in FIG. 1, the first ID and the second ID are 123 and 777, respectively.

In step S1, the transmission node 40 generates a data frame including data A, the notification of which is made to the reception node 60. The data frame is assumed to be identified on the basis of the first ID (=123).

In step S2, the transmission node 40 transmits the data frame generated in step S1. Since the data frame is broadcast, the frame reaches both the reception node 60 and the communication control apparatus 10. Because the reception node 60 recognizes the ID=123 as a reception target, the reception node 60 receives the data frame to obtain the data A. Since the communication control apparatus 10 also recognizes the ID=123 as a reception target, the communication control apparatus 10 receives the data frame to obtain the data A.

In step S3, the communication control apparatus 10 calculates a MAC from the data A. FIG. 1 assumes that a result of the MAC calculation in the communication control apparatus 10 is MAC 1. An arbitrary method is available as a MAC calculation method as long as the method is common to both the communication control apparatus 10 and the transmission node 40.

As indicated by step S4, the transmission node 40 also calculates a MAC by using the transmitted data A. FIG. 1 assumes that a result of the MAC calculation in the transmission node 40 is MAC 2.

In step S5, the transmission node 40 broadcasts data (data B) including the result of the MAC calculation by using the second ID (=777) . Since the second ID is not set as a reception target in the reception node 60, the reception node 60 discards the frame including the data B without receiving the frame. In contrast, since the second ID is set as a reception target in the communication control apparatus 10, the communication control apparatus 10 receives the frame including the data B.

In step S6, the communication control apparatus 10 extracts, from the data B, the MAC 2 calculated in the transmission node 40. The communication control apparatus 10 makes a comparison between the MAC 1 calculated in step S3 and the extracted MAC 2. When the MAC 1 and the MAC 2 match, the communication control apparatus 10 determines that a replay attack has not occurred, and terminates the process ("YES" in step S6).

In contrast, when the MAC 1 and the MAC 2 do not match, the communication control apparatus 10 determines that the replay attack has occurred ("NO" in step S6, step S7). Accordingly, the communication control apparatus 10 issues, to the reception node 60, a request to abort the process of a frame using the ID=123 (step S8).

As described above, with the control method explained with reference to FIG. 1, a frame that includes the value of a MAC calculated in the transmission node 40 is not received by the reception node 60. Accordingly, the reception node 60 does not execute processes such as a process for receiving a MAC, a process for generating a MAC from received data, and the like. Therefore, a load imposed on the reception node 60 remains unchanged even if a detection of a replay attack is executed. In contrast, the communication control apparatus 10 can detect a replay attack by making a comparison between a MAC calculated by using data received by the reception node 60 and a MAC reported from the transmission node 40 to verify whether the replay attack has occurred.

The system where the communication control apparatus 10 generates a MAC and detects a replay attack also has an advantage such that a reception node 60 disabled to generate a MAC is available. A device included in a currently popular system does not include processing circuitry and the like for generating a MAC, or for detecting a reply attack. With the method according to the embodiment, the communication control device 10 can detect a replay attack as a replacement for an individual reception node 60. As a result, a device that receives data can prevent a replay attack without executing a process for making a comparison between MACs.

### <Examples of a device configuration and a frame format>

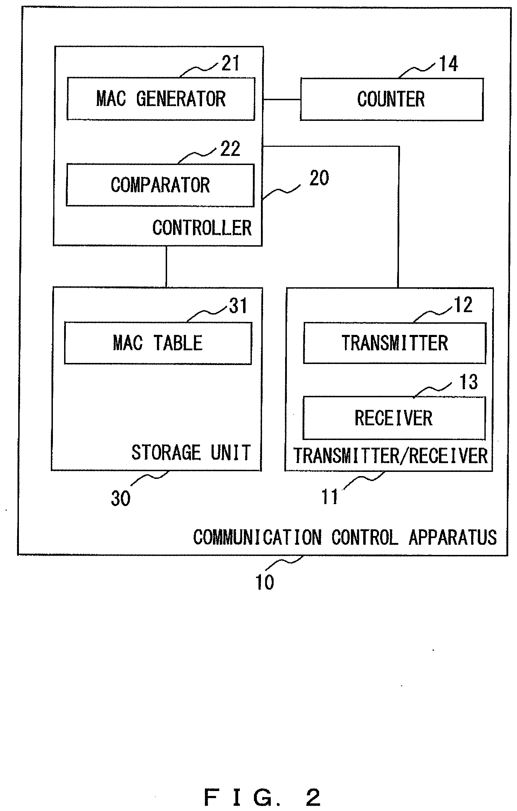

FIG. 2 illustrates an example of a configuration of the communication control apparatus 10. The communication control apparatus 10 includes a transmitter/receiver 11, a counter 14, a controller 20 and a storage unit 30. The transmitter/receiver 11 includes a transmitter 12 and a receiver 13. The controller 20 includes a MAC generator 21 and a comparator 22. The storage unit 30 stores a MAC table 31.

The transmitter 12 transmits a frame to a different device within the CAN network as needed. The receiver 13 receives a frame including an ID set to be received by the communication control apparatus 10 among frames transmitted from different devices within the CAN network. The receiver 13 outputs the received data frame to the MAC generator 21. In the meantime, the receiver 13 outputs, to the comparator 22, a frame (notification frame) used to make a notification of the MAC generated in the transmission node 40. The counter 14 generates a counter value used to generate a MAC. The counter value is stored in the storage unit 30 as needed.

The MAC generator 21 generates a MAC by using data within the frame input from the receiver 13, and the counter value. A MAC generation method will be described later. The MAC generator 21 stores the generated MAC in the MAC table 31 in association with the ID within the frame. The comparator 22 determines whether a replay attack has occurred by making a comparison between the MAC within the frame input from the receiver 13 and MAC stored in the MAC table 31. When the MACs to be compared do not match, the comparator 22 determines that the replay attack has occurred.

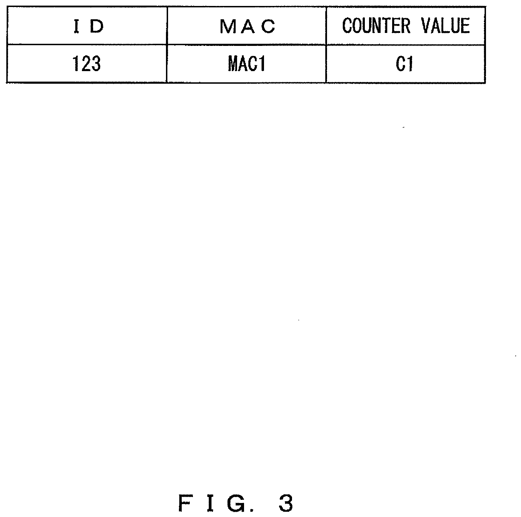

FIG. 3 illustrates an example of the MAC table 31. The MAC table 31 has an arbitrary form in which a MAC generated by the MAC generator 21 and an ID within a frame used to transmit and receive data that is utilized to generate the MAC are associated with each other and stored. In the example illustrated in FIG. 3, an ID of a frame, a value resulting from a MAC calculation, and a counter value are associated with one another and stored. The counter value is a value that is used to generate a MAC and is updated by the counter 14 as needed. Note that the form of the MAC table 31 is changeable in accordance with an implementation. For example, when only one ID is used to transmit and receive a data frame within the system, the MAC table 31 may include no IDs.

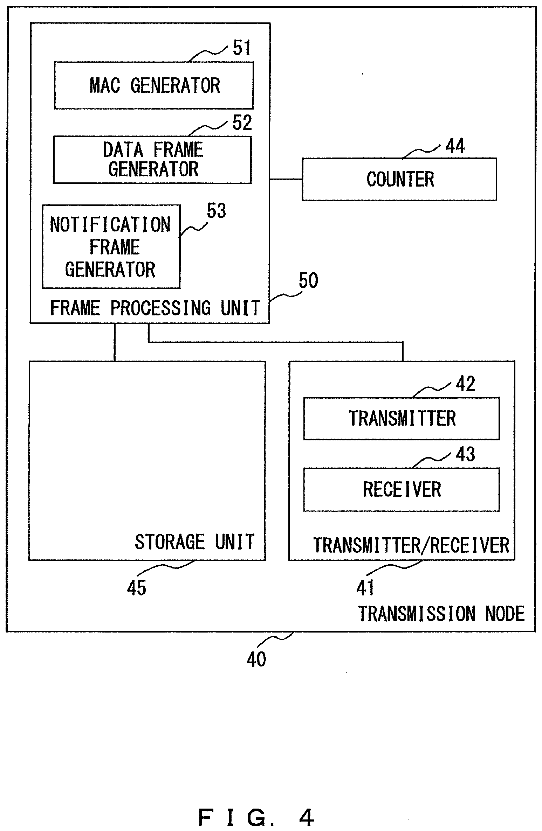

FIG. 4 illustrates an example of a configuration of the transmission node 40. The transmission node 40 includes a transmitter/receiver 41, a counter 44, a storage unit 45 and a frame processing unit 50. The transmitter/receiver 41 includes a transmitter 42 and a receiver 43. The frame processing unit 50 includes a MAC generator 51, a data frame generator 52 and a notification frame generator 53.

The transmitter 42 transmits a frame input from the data frame generator 52 or the notification frame generator 53 to a different device within the CAN network. The receiver 43 receives a frame from a different device within the CAN network as needed. The counter 44 generates a counter value used to generate a MAC. The counter value is stored in the storage unit 45 as needed.

The data frame generator 52 generates a data frame including data for which the notification is made to the reception node 60. The MAC generator 51 calculates a MAC by using the data within the data frame. The notification frame generator 53 generates a notification frame for making a notification of the MAC calculated by the MAC generator 51. Note that an ID not to be received by the reception node 60 is set in the notification frame.

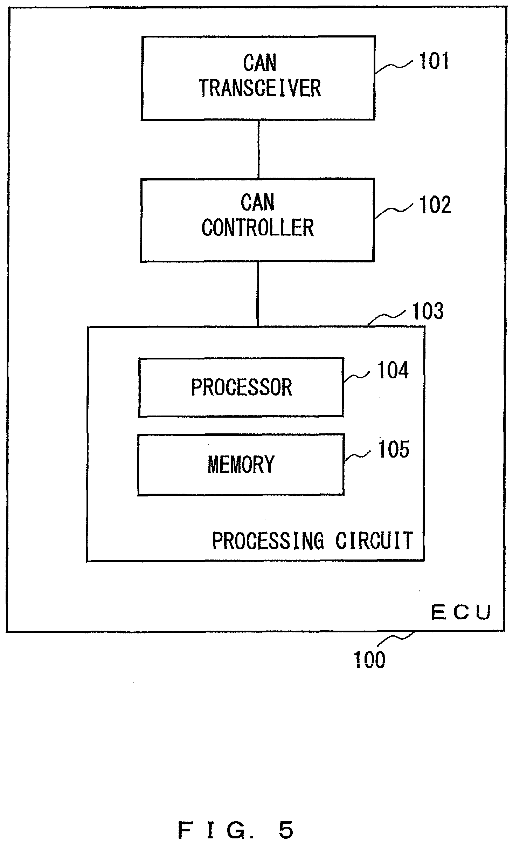

FIG. 5 illustrates an example of a hardware configuration. Both the communication control apparatus 10 and the transmission node 40 can be implemented with the hardware illustrated in FIG. 5. In the example illustrated in FIG. 5, both the communication control apparatus 10 and the transmission node 40 are implemented as an ECU 100. The ECU 100 includes a CAN transceiver 101, a CAN controller 102 and a processing circuit 103. The processing circuit 103 includes a processor 104 and a memory 105.

The CAN transceiver 101 executes, as needed, a process, such as an adjustment of a bus voltage or the like, by which the ECU 100 communicates with a different device within the CAN network. The CAN controller 102 extracts data by executing processes such as CRC (Cyclic Redundancy Check), bit stuffing and the like for the received frame. The CAN controller 102 outputs the data to the processor 104. The processor 104 is an arbitrary processing circuit. The processor executes a process by reading a program stored in the memory 105.

In the communication control apparatus 10, the transmitter/receiver 11 is implemented by the CAN transceiver 101 and the CAN controller 102. The processor 104 operates as the counter 14 and the controller 20. The memory 105 operates as the storage unit 30.

In the transmission node 40, the CAN transceiver 101 and the CAN controller 102 implement the transmitter/receiver 41. The processor 104 operates as the counter 44 and the frame processing unit 50. The memory 105 operates as the storage unit 45.

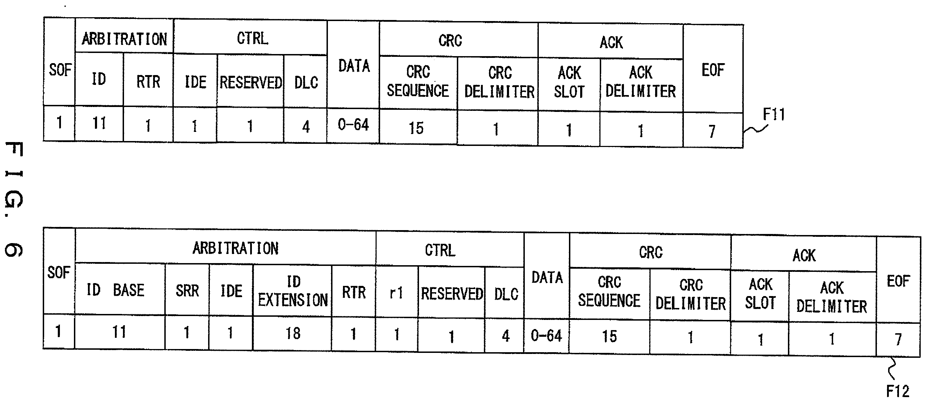

FIG. 6 illustrates examples of formats of a transmitted or received frame. F11 illustrated in FIG. 6 is an example of the format of a frame having general specifications, while F12 is that of the format of a frame used in extended specifications.

The frame having general specifications includes an SOF (Start of Frame), an arbitration field, a control field, a data field, a CRC field, an ACK field and an EOF (End of Frame) . The arbitration field includes an ID and an RTR (Remote Transmission Request). Here, the ID is identification information used to identify a frame. The control field includes an IDE (Identifier Extension), a reserved bit and a DLC (Data Length Code). The CRC field includes a CRC sequence and a CRC delimiter. The ACK field includes an ACK slot and an ACK delimiter. Bit lengths of the information elements included in the fields are those represented in the bottom row of F11. For example, the length of the ID is 11 bits, and the length of the data field is a variable length ranging from 0 to 64 bits.

Also the frame (F12) used in the extended specifications includes an SOF, an arbitration field, a control field, a data field, a CRC field, an ACK field and an EOF. The arbitration field having the extended specifications includes an ID base, an SRR (Substitute Remote Request Bit), an IDE, an ID extension and an RTR. In the extended specifications, a bit string obtained by concatenating a bit string stored as the ID extension to a bit string stored as the ID base represents identification information (ID) of a frame. Also, in the format having the extended specifications, fields from the control field to the EOF are similar to those of the general specifications. Moreover, bit lengths of the information elements included in the fields are those described in the bottom row of F12. Accordingly, in the extended format, a bit string of 29 bits in which 11 bits of the ID base is concatenated to 18 bits of the ID extension is used as identification information of a transmission source. Examples of processes executed in the embodiments are described below by taking, as an example, a case where a frame using the format indicated by F11 of FIG. 6 is transmitted and received. Also, when a frame used for a communication has the extended specifications, processes are similarly executed.

### <First embodiment>

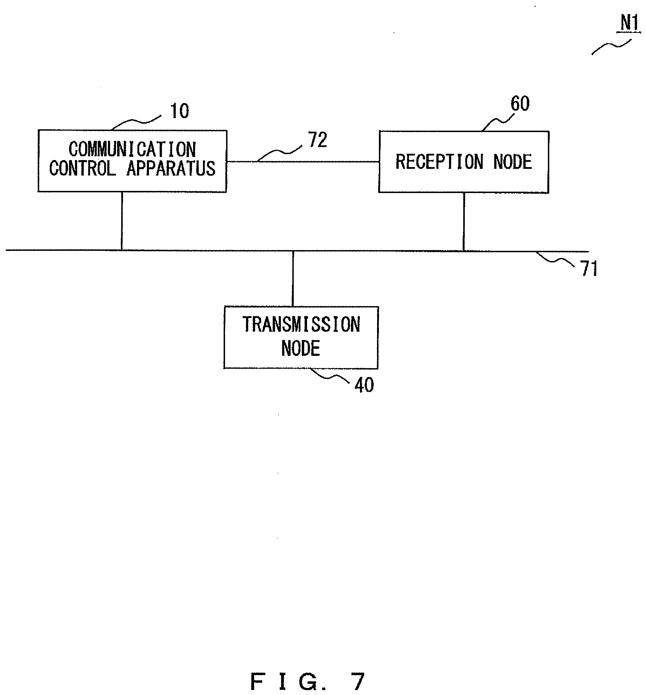

FIG. 7 is an explanatory diagram of an example of a network N1 to which a first embodiment is applied. For ease of understanding, the network N1 represents an example of a case where one communication control apparatus 10, one transmission node 40 and one reception node 60 are installed. However, the number of transmission nodes 40 and the number of reception nodes 60 within the system are arbitrary. The first embodiment assumes that the number of IDs used to transmit and receive a data frame is one. The first embodiment is described by taking, as an example, a case where an ID=123 is used to transmit and receive a data frame.

The communication control apparatus 10, the reception node 60 and the transmission node 40 are interconnected by a bus 71, and a frame transmitted from any of the devices may be broadcast. Each of the devices receives a frame including an ID set as a reception target, and discards other frames. The communication control apparatus 10 and the reception node 60 are connected by a connection wire 72 for transmitting a signal intended to make, to the reception node 60, a notification that a replay attack has been detected.

It is assumed that the transmission node 40 and the communication control apparatus 10 hold a common key prior to the start of a communication. Here, a method by which the communication control apparatus 10 and the transmission node 40 obtain the common key may be any of the arbitrary known methods. The transmission node 40 and the communication control apparatus 10 set an initial value of the counter value so that the counter value used to generate a MAC can become common. Here, the counter value is used to generate a MAC, and a different value is used for each frame. Moreover, the counter value itself is not transmitted and received between any of the devices.

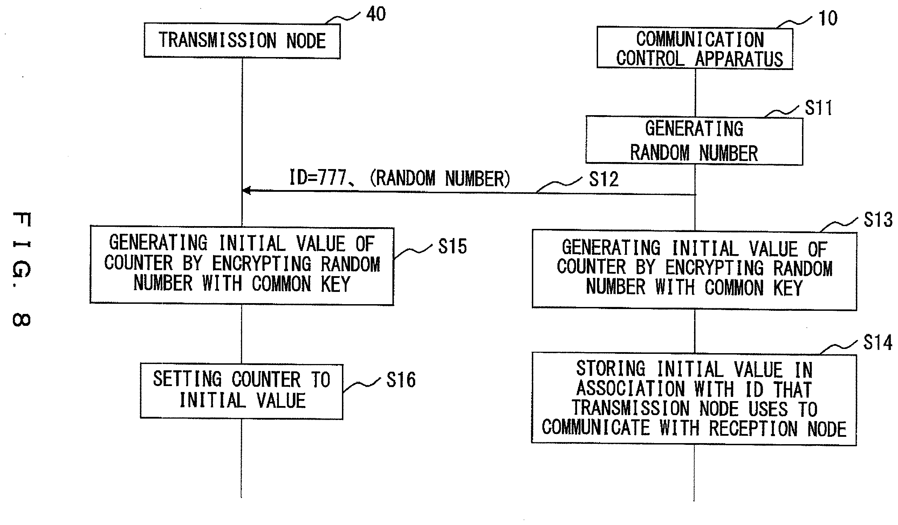

FIG. 8 is a sequence diagram illustrating an example of a method for setting the initial value of the counter value. The communication control apparatus 10 generates a random number for setting the initial value of the counter value used to calculate a MAC that is utilized to detect a replay attack (step S11). Next, the communication control apparatus 10 broadcasts the generated random number by using an ID that is received by the transmission node 40 and is not received by the reception node 60. Note that this communication may be encrypted. The following example assumes that the transmission node 40 receives an ID=777, and uses the ID=777 to make a notification of a MAC. The example also assumes that the reception node 60 does not receive a frame having the ID=777. Accordingly, the communication control apparatus 10 broadcasts a frame after incorporating the generated random number into the data field within the frame including the ID=777 (step S12).

Additionally, in step S13, the communication control apparatus 10 generates the initial value of the counter 14 by encrypting the random number with a common key. The communication control apparatus 10 stores the initial value obtained in step S13 in association with an ID that the transmission node 40 uses to communicate with the reception node 60 (step S14).

In the meantime, the transmission node 40 receives the frame (ID=777) that has been transmitted from the communication control apparatus 10 in step S12, and obtains the random number from the data field of the received frame. Moreover, the transmission node 40 generates the initial value of the counter 44 by encrypting the obtained random number with the common key (step S15). The transmission node 40 sets the initial value obtained in step S15 as the initial value of the counter 44 (step S16) .

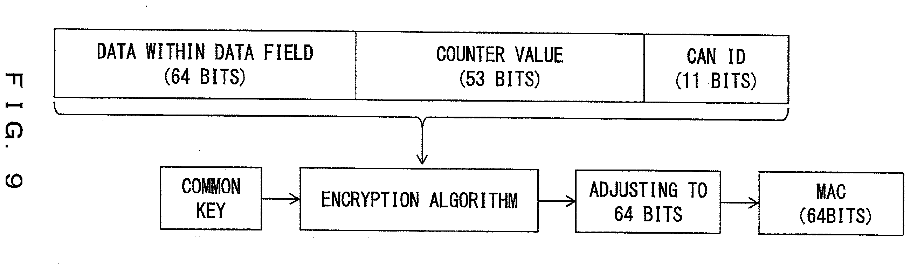

FIG. 9 is an explanatory diagram of an example of the MAC generation method. The MAC generation method is common to the communication control apparatus 10 and the transmission node 40. Therefore, the method is explained before examples of processes executed in the first embodiment are described. As the MAC generation method, a method using a hash function such as HMAC-SHA 1 (Hash-based Message Authentication Code - Secure Hash Algorithm 1), HMAC-SHA 256 or the like, or a method using a block encryption algorithm is available. An example of a case where the block encryption algorithm is used is referred to in the following description with reference to FIG. 9. An arbitrary method may be available as the MAC generation method as long as the method is common to the communication control apparatus 10 and the transmission node 40.

To generate a MAC, a sequence obtained by concatenating data within the data field of a frame for which a MAC is to be calculated, a counter value and an ID (CAN ID) of the frame for which the MAC is to be calculated is used. Here, the counter value is a value processed by the counter 14 or the counter 44 so that a different value can be used each time a MAC is calculated. In the example illustrated in FIG. 9, the sequence in which data, a counter value and a CAN ID are concatenated in this order is generated. However, the order of concatenated elements may be changed in accordance with an implementation. Next, a device that generates a MAC generates an encrypted sentence by encrypting the sequence obtained by concatenating the data, the counter value and the CAN ID with the use of the common key. The device that generates a MAC selects 64 bits from the encrypted sentence with a predetermined method, and defines the obtained value as a MAC. A method for selecting 64 bits is arbitrary as long as the method is common to the communication control apparatus 10 and the transmission node 40. For example, the MAC generator 21 and the MAC generator 51 may define, as a MAC, the first 64 bits of a generated encrypted sentence, or define, as a MAC, the last 64 bits of the encrypted sentence.

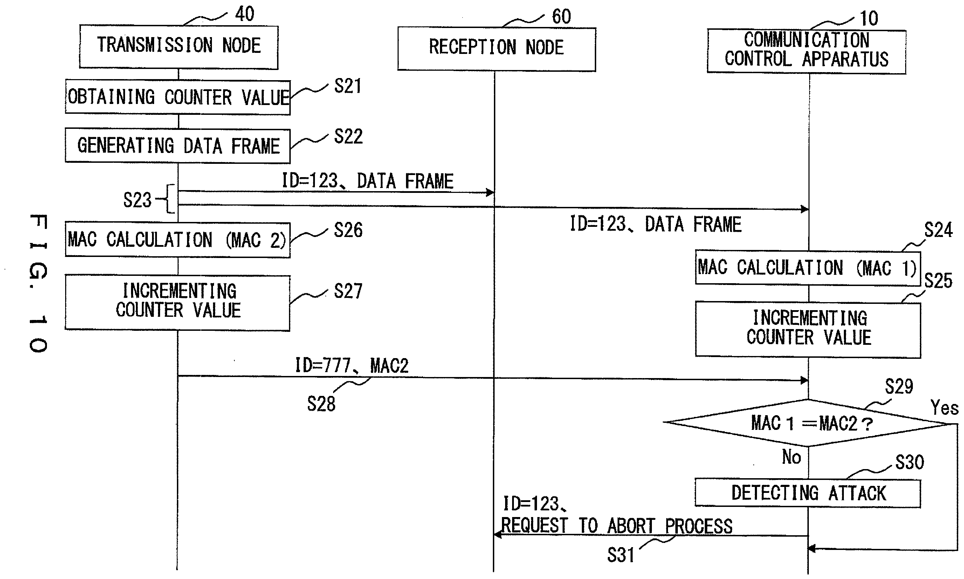

FIG. 10 is a sequence diagram for explaining an example of a control method in the first embodiment. The method illustrated in FIG. 10 is merely one example. The order of steps, such as steps S21 and S22, may be switched.

The MAC generator 51 within the transmission node 40 obtains a counter value (the value of the counter 44) to be used when a data frame is transmitted to the reception node 60 (step S21) . The data frame generator 52 generates a data frame having the ID=123 by incorporating data, the notification of which is to be made to the reception node 60, into the data field (step S22) . The data frame generator 52 outputs the generated data frame to the transmitter 42. The transmitter 42 broadcasts the data frame (step S23) . Since the ID=123 that is received by both the reception node 60 and the communication control apparatus 10 is used for the data frame, the frame is received by both the reception node 60 and the communication control apparatus 10.

Because the ID of the received frame is set as the value (ID=123) for transmitting and receiving a data frame, the receiver 13 of the communication control apparatus 10 outputs the received frame to the MAC generator 21. The MAC generator 21 calculates a MAC (MAC 1) by using the value of the data field within the input frame, and the counter value within the MAC table 31 (step S24). The MAC calculation method is that described with reference to FIG. 9. The MAC generator 21 records the MAC 1 in association with the ID (=123) of the received frame. Thereafter, the counter 14 increments the counter value in preparation for the next MAC calculation (step S25).

In the meantime, the MAC generator 51 within the transmission node 40 calculates a MAC (MAC2) by using the value of the data field within the transmitted frame, the counter value, and the ID within the transmitted frame after the data frame has been transmitted (step S26) . Also the MAC calculation performed in the MAC generator 51 is that described with reference to FIG. 9. Thereafter, the counter 44 increments the counter value in preparation for the next MAC calculation (step S27) .

The MAC generator 51 outputs the generated MAC to the notification frame generator 53. The notification frame generator 53 generates a notification frame for making a notification of an input MAC. At this time, an ID recognized as a reception target that is received by the communication control apparatus 10 and not received by the reception node 60 is set in the notification frame. The example illustrated in FIG. 10 assumes that the ID=777 is set in the notification frame. The example also assumes that the MAC 2 obtained by the MAC generator 51 is incorporated into the data field of the notification frame. Namely, the MAC 2 calculated by the transmission node 40 is a value that is used to verify whether a replay attack has occurred in the communication control apparatus 10. The MAC generator 51 broadcasts the notification frame via the transmitter 42 (step S28) . Then, the notification frame is received by the communication control apparatus 10.

Since the ID of the received frame is the ID (=777) that indicates the notification frame, the receiver 13 of the communication control apparatus 10 outputs the notification frame to the comparator 22. When the notification frame has been input, the comparator 22 obtains an already calculated MAC 1 from the MAC table 31. Moreover, the comparator 22 extracts the MAC (MAC 2) included in the data field of the input notification frame. The comparator 22 determines whether the MAC 1 and the MAC 2 match (step S29) . When the MAC 1 and the MAC 2 match, the comparator 22 determines that a replay attack has not been detected, and terminates the process ("YES" in step S29).

In contrast, when the MAC 1 and the MAC 2 do not match, the comparator 22 determines that the replay attack has been detected (step S30). The comparator 22 transmits a signal for issuing a request to abort the process of a frame having the ID=123 to the reception node 60 via the connection wire 72 (step S31) . The form of the signal is assumed to be an arbitrary one that enables the reception node 60 to recognize that the request to abort the process of a frame having the ID=123 has been issued.

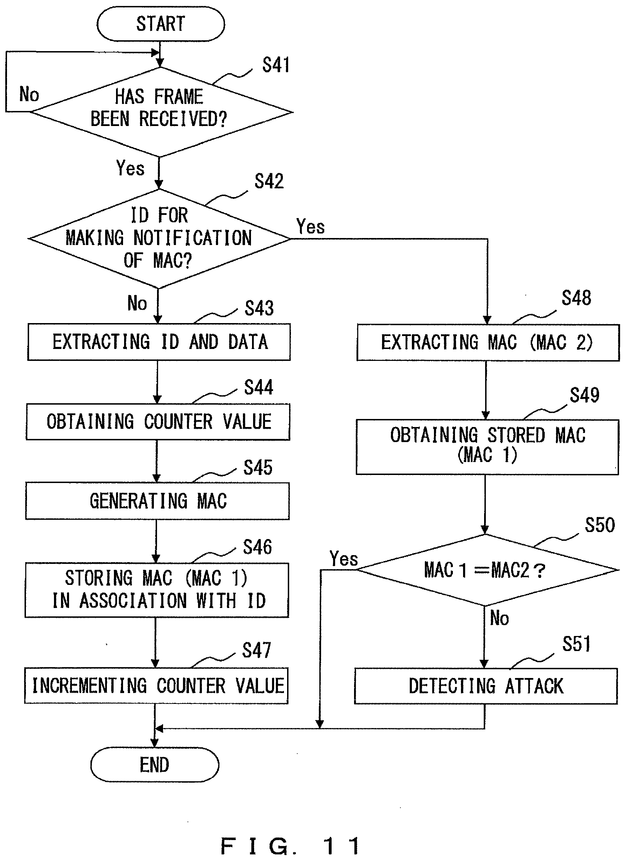

FIG. 11 is a flowchart for explaining an example of the process executed by the communication control apparatus 10 in the first embodiment. The receiver 13 waits until a frame is received ("NO" in step S41). Upon receipt of the frame, the receiver 13 determines whether the ID of the received frame is an ID for making a notification of a MAC ("YES" in step S41, step S42).

When the ID of the received frame is not the ID for making a notification of a MAC, the receiver 13 outputs the received frame to the MAC generator 21 ("NO" in step S42) . The MAC generator 21 extracts the ID and data from the received frame (step S43). When the extracted ID is a value for which a MAC is to be verified, the MAC generator 21 obtains the counter value (step S44). The MAC generator 21 generates a MAC by using the ID, the data and the counter value (step S45) . The MAC generator 21 stores the calculated MAC (MAC 1) in association with the ID of the received frame (step S46). Next, the counter 14 increments the counter value (step S47).

When the ID of the received frame is the ID for making a notification of a MAC, the receiver 13 outputs the received frame to the comparator 22 ("YES" in step S42). The comparator 22 extracts, from the input frame, the MAC (MAC 2) calculated by the transmission node 40 (step S48). The comparator 22 obtains the MAC (MAC 1) stored in the MAC table 31, and makes a comparison between the MAC 1 and the MAC 2 (steps S49 and S50) . When the MAC 1 and the MAC 2 match, the comparator 22 terminates the process ("YES" in step S50). When the MAC 1 and the MAC 2 do not match, the comparator 22 determines that an attack has been detected ("NO" in step S50, step S51). Thereafter, the comparator 22 issues a request to abort the process of the frame identified on the basis of the ID with which the attack has been detected, to the reception node 60 via the connection wire 72.

As described above, in the first embodiment, a replay attack can be detected in the communication control apparatus 10 even though the reception node 60 does not execute the process for a MAC. Moreover, the reception node 60 can abort the process of a frame transmitted by a replay attack on the basis of a notification made from the communication control apparatus 10. Accordingly, a replay attack can be detected and the system can be protected from a replay attack without increasing a processing load imposed on the transmission node 40. Moreover, since the process for a MAC is not executed in the reception node 60, an existing ECU is made available as the reception node 60 by laying the connection wire 72 between the communication control apparatus 10 and the reception node 60.

In a MAC used in the first embodiment, the counter value is processed by the counter 14 or the counter 44 so that a different value can be used each time a MAC is calculated. Namely, even if a frame that was transmitted in the past is retransmitted, the counter value used when the MAC generator 21 calculates a MAC by using received data will be changed by the counter 14 from that used when the retransmitted frame has been initially transmitted. Accordingly, a counter value used to calculate a MAC will be different even if a notification frame of a MAC that was transmitted for the retransmitted frame is retransmitted. Therefore, the comparator 22 can detect a replay attack.

Note that the communication control apparatus 10 may include notification means, such as a screen or the like, for making a notification to a user. In this case, the communication control apparatus 10 may make, to the user, a notification that an attack is being made by using the notification means such as a screen or the like without utilizing the connection wire 72 when the replay attack has been detected.

### (Modification example)

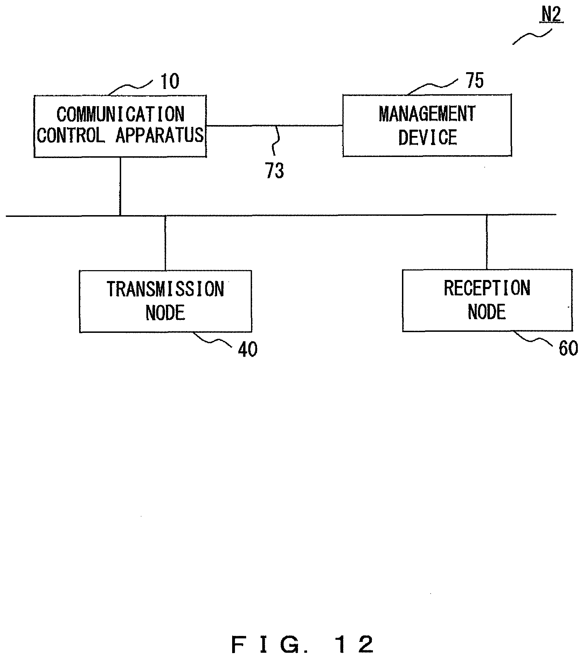

FIG. 12 is an explanatory diagram of an example of a network. A modification example of the first embodiment is described with reference to FIG. 12. A network N2 illustrated in FIG. 12 includes the communication control apparatus 10, the transmission node 40, the reception node 60, and a management device 75. Here, the management device 75 is a device installed in a management center that manages communications within a CAN system. The communication control apparatus 10 and the management device 75 are connected by a connection wire 73.

It is assumed that the communication control apparatus 10, the transmission node 40, and the reception node 60 are interconnected by a bus so that the devices can transmit and receive a frame. Upon detection of a replay attack with the procedures described in the first embodiment, the communication control apparatus 10 makes, to the management device 75, a notification that the replay attack has occurred. An operator of the management device 75 is assumed to execute a process for preventing a replay attack when the notification that the replay attack has been detected is made to the management device 75. When a notification instruction or the like is issued from the management device 75 to the reception node 60, the management device 75 and the reception node 60 may be connected.

In another modification example, the communication control apparatus 10 and the reception node 60 possess a common key used to encrypt the abortion instruction, and a counter value used to encrypt the abortion instruction. In this case, the communication control apparatus 10 can make a notification of the abortion instruction to the reception node 60 via the bus 71. In the following description, the request to abort the process of a frame including an ID identical to that within a frame from which a replay attack has been detected is referred to as an "abortion instruction". Moreover, a common counter value used to encrypt the abortion instruction is referred to as an "abortion counter value" in order to facilitate a distinction from the counter value handled by the counter 14 and the counter 44. As an initial value of the abortion counter, a value common to the communication control apparatus 10 and the reception node 60 is set in the communication control apparatus 10 and the reception node 60 with a process similar to that described with reference to FIG. 8.

When a replay attack has been detected, the comparator 22 encrypts a sequence obtained by concatenating an abortion counter value to the abortion instruction with the use of a common key for encrypting the abortion instruction. The comparator 22 generates a frame that includes the abortion instruction after being encrypted in the data field, and sets an ID to that for transmitting the abortion instruction. Here, the ID for transmitting the abortion instruction is assumed to be a value that is received by the reception node 60 and not received by the transmission node 40. The communication control apparatus 10 broadcasts the frame including the encrypted abortion instruction. Then, the frame including the encrypted abortion instruction is received by the reception node 60 without being received by the transmission node 40.

The reception node 60 obtains a sequence in which the abortion counter value is concatenated to the abortion instruction, by decrypting the value within the data field of the received frame with a common key for decrypting the abortion instruction. When the abortion counter value within the obtained sequence and a value stored in the reception node 60 match, the reception node 60 determines that the abortion instruction has been issued from the communication control apparatus 10, and aborts the process of the frame. In this case, the reception node 60 is assumed to abort the process of all the frames when the node has properly received one abortion instruction.

The process of a MAC is not executed in the reception node 60 even when the first embodiment is modified in this way, whereby a process for detecting a replay attack, and a process for protecting the system from a replay attack can be executed without increasing the load imposed on the reception node 60 so much.

### <Second embodiment>

The first embodiment has referred to the case where the ID of one type is used for data frames. However, it is possible for a plurality of IDs to be used to transmit and receive data frames. Accordingly, the second embodiment refers to a case where a plurality of IDs are used to transmit and receive a data frame.

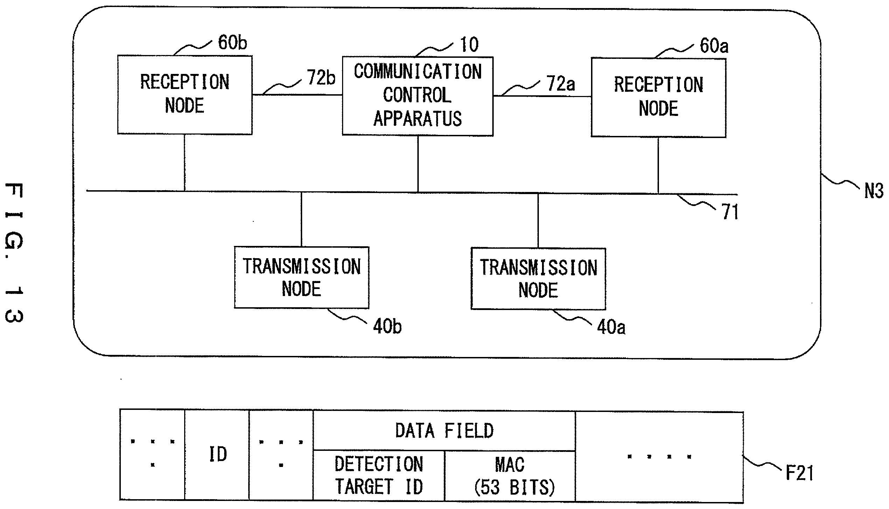

FIG. 13 is an explanatory diagram of examples of a network and a frame to which the second embodiment is applied. The second embodiment assumes that a network N3 illustrated in FIG. 13 is used. The network N3 includes the communication control apparatus 10, transmission nodes 40 (40a, 40b), and reception nodes 60 (60a, 60b). The communication control apparatus 10, the transmission node 40a, the transmission node 40b, the reception node 60a and the reception node 60b are interconnected by the bus 71 so that the devices can mutually transmit and receive a frame. Moreover, the communication control apparatus 10 and the reception node 60a are connected by a connection wire 72a. When a replay attack using an ID as a reception target of the reception node 60a has been detected, the connection wire 72a is used to issue a request to abort the process of the frame from the communication control apparatus 10 to the reception node 60a. Similarly, the communication control apparatus 10 and the reception node 60b are connected by a connection wire 72b. When a replay attack using the ID as the reception target of the reception node 60b has been detected, the connection wire 72b is used to issue a request to abort the process of the frame from the communication control apparatus 10 to the reception node 60b.

A frame F21 illustrated in FIG. 13 is an example of a notification frame used in the second embodiment. The notification frame used in the second embodiment is similar to that of the first embodiment, except in a data field. The data field includes a detection target ID and a MAC. The detection target ID is an ID against which whether a replay attack is being made is determined. Since both the MAC and the detection target ID are included in the data field in the second embodiment, the bit length of the MAC is 53 bits. Procedures of a MAC generation method prior to the adjustment of the number of bits in the second embodiment are as described with reference to FIG. 9. A device that generates a MAC selects, with a predetermined method, 53 bits from a sentence encrypted by using data, a counter value, an ID, and a common key. Also the second embodiment assumes that a method for selecting bits used for a MAC is identical in the communication control apparatus 10, the transmission node 40a and the transmission node 40b.

Note that a frame indicated by the frame F21 is used also when the communication control apparatus 10 sets the initial value of the counter together with the transmission node 40a or the transmission node 40b. When the initial value of the counter is set, a detection target ID and a random number for generating the initial value are transmitted from the communication control apparatus 10. When the detection target ID within the frame received from the communication control apparatus 10 is an ID used for the transmission process, each of the transmission nodes 40 obtains the random number associated with the detection target ID, and encrypts the random number with a common key exchanged in advance with the communication control apparatus 10. Each of the transmission nodes 40 sets the obtained value as the initial value of the counter. A setting of the initial value of the counter value in the communication control apparatus 10 is similar to that described with reference to FIG. 8. The communication control apparatus 10 generates the same number of random numbers as are used to transmit and receive data frames in the system, and transmits the random numbers to the transmission nodes 40 in association with the respective IDs. Moreover, the communication control apparatus 10 stores values obtained by encrypting the random numbers with the common key in association with the respective IDs.

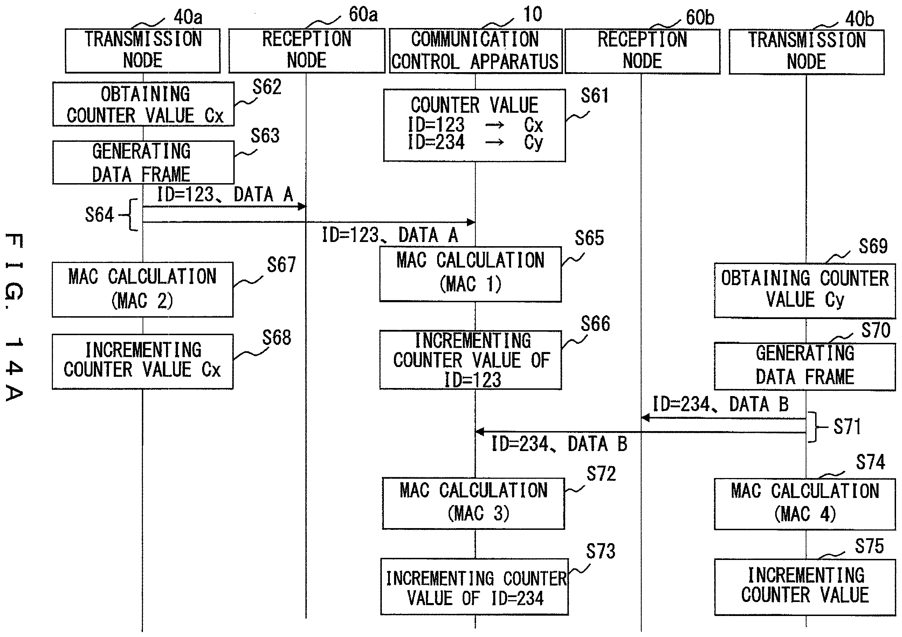

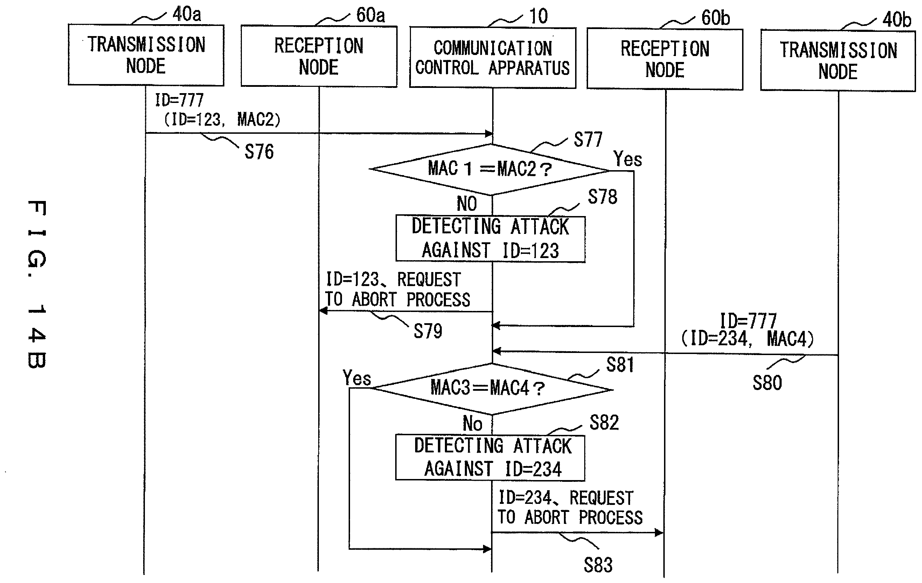

FIGs. 14A and 14B are sequence diagrams for explaining an example of a control method in the second embodiment. The example of the control method is described by taking, as an example, a case where the transmission node 40a and the transmission node 40b transmit a data frame having the ID=123 and a data frame having the ID=234, respectively. The reception node 60a is assumed to receive a frame having the ID=123, and not to receive a frame having the ID=234. In contrast, the reception node 60b is assumed to receive a frame having the ID=234, and not to receive a frame having the ID=123. Moreover, the following description assumes that an ID used to transmit and receive a MAC is an ID=777 in both of the transmission nodes 40.

The second embodiment assumes that the communication control apparatus 10 stores an ID to be received by the reception node 60 connected to a connection wire 72 for each of connection wires 72 that connect the communication control apparatus 10 and each corresponding reception node 60. The following description assumes that the communication control apparatus 10 stores information such that a connection destination (reception node 60a) via the connection wire 72a receives the ID=123, and a connection destination (reception node 60b) via the connection wire 72b receives the ID=234.

The timings at which frames having the respective IDs are transmitted are not particularly adjusted. Accordingly, a transmission using a different ID is sometimes performed between a transmission of a data frame having either of the IDs and that of a frame for making a notification of a MAC used to evaluate the validity of data within a data frame. A process executed in a case where the transmission node 40b has transmitted a data frame including the data B before the transmission node 40a transmits a notification frame is described with reference to FIGs. 14A and 14B.

In the following description, a letter of the alphabet assigned to an operating transmission node 40 is sometimes appended to a reference numeral of the node in order to easily identify the operating device. For example, a MAC generator 51a is a MAC generator 51 included in the transmission node 40a.

As indicated by step S61, the communication control apparatus 10 stores a counter value for each ID. The MAC table 31 held by the communication control apparatus 10 in the second embodiment includes a plurality of entries for each transmitted or received ID. For the sake of convenience, entries of the counter value and the ID in the MAC table 31 are extracted and represented in step S61. Hereafter, it is assumed that the counter value of the ID=123 and the counter value of the ID 234 are respectively Cx and Cy at a point in time of step S61.

In step S62, the MAC generator 51a within the transmission node 40a obtains the counter value. The communication control apparatus 10 and the transmission node 40a make their counter values of the ID=123 match in advance with the procedures described with reference to FIG. 8. Therefore, the MAC generator 51a obtains Cx as a counter value.

The data frame generator 52a generates a data frame having the ID=123 by incorporating the data A into the data field (step S63). The data frame generator 52a broadcasts the data frame via the transmitter 42a (step S64). Since the ID included in the data frame is 123, the data frame is received by both the reception node 60a and the communication control apparatus 10.

Since the ID of the received frame is set to 123, the receiver 13 of the communication control apparatus 10 outputs the received frame to the MAC generator 21 in step S65. The MAC generator 21 calculates a MAC (MAC 1) by using the counter value Cx associated with the ID=123 and the data A with the process described with reference to FIG. 9. The MAC generator 21 records the MAC 1 in the MAC table 31 in association with the ID (=123) of the received frame. In step S66, the counter 14 increments the counter value in preparation for a MAC calculation using data transmitted by utilizing the ID=123.

In the meantime, the MAC generator 51a within the transmission node 40a calculates a MAC (MAC 2) by using the data A, the counter value Cx and the ID within the transmitted frame after the frame including the data A has been transmitted (step S67) . Thereafter, the counter 44a increments the counter value associated with the ID=123 in preparation for the next MAC calculation (step S68).

In step S69, the MAC generator 51b within the transmission node 40b obtains the counter value Cy used to calculate a MAC corresponding to the frame using the ID=234. Note that both the communication control apparatus 10 and the transmission node 40b make the counter value of the ID=234 match in advance with the procedures described with reference to FIG. 8.

The data frame generator 52b generates a data frame having the ID=234 by incorporating the data B into the data field (step S70). The data frame generator 52b broadcasts the data frame via the transmitter 42b (step S71). Since the ID included in the data frame is 234, the data frame is received by the reception node 60b and the communication control apparatus 10.

Since the ID of the received frame is 234, the receiver 13 of the communication control apparatus 10 outputs the received frame to the MAC generator 21 in step S72. The MAC generator 21 calculates a MAC (MAC 3) by using the counter value Cy associated with the ID=234, and the data B. The MAC generator 21 records the MAC 3 in the MAC table 31 in association with the ID (=234) of the received frame. In step S73, the counter 14 increments the counter value in preparation for a MAC calculation using the data transmitted by using the ID=234.

In the meantime, the MAC generator 51b within the transmission node 40b calculates a MAC (MAC 4) by using the data B, the counter value Cy and the ID=234 after the frame including the data B has been transmitted (step S74). Thereafter, the counter 44b increments the counter value associated with the ID=234 (step S75).

FIG. 14B illustrates an example of a case where the transmission node 40a has transmitted a notification frame earlier than the transmission node 40b.

In step S76, the notification frame generator 53a of the transmission node 40a generates a notification frame for making a notification of the MAC 2, and broadcasts the notification frame via the transmitter 42a. Here, the MAC 2 is adjusted to 53 bits as earlier described with reference to the frame F21 illustrated in FIG. 13. Accordingly, the detection target ID=123 and the MAC 2 are incorporated into the data field of the notification frame. Moreover, the ID of the notification frame is set to 777. The communication control apparatus 10 receives the notification frame. However, since none of the reception nodes 60 recognize the frame having the ID=777 as a reception target, the reception node 60a and the reception node 60b do not receive the notification frame.

The receiver 13 of the communication control apparatus 10 outputs, to the comparator 22, the notification frame received in step S76. The comparator 22 obtains, from the MAC table 31, a MAC associated with the detection target ID within the notification frame. Here, since the detection target ID is 123, the comparator 22 obtains the MAC 1. Moreover, the comparator 22 extracts the MAC 2 from the data within the notification frame. The comparator 22 determines whether the MAC 1 and the MAC 2 match (step S77). When the MAC 1 and the MAC 2 match, the comparator 22 determines that a replay attack has not been detected ("YES" in step S77). In contrast, when the MAC 1 and the MAC 2 do not match, the comparator 22 determines that the replay attack against the ID=123 has been detected ("NO" in step S77, step S78) . The comparator 22 transmits a signal for issuing a request to abort the process of a frame having the ID=123 to the reception node 60a via the connection wire 72a (step S79) .

In step S80, the notification frame generator 53b of the transmission node 40b generates a notification frame for making a notification of the detection target ID=234 and the MAC 4, and broadcasts the generated notification frame via the transmitter 42b. Also in the transmission node 40b, the ID is set to 777 in the notification frame. Therefore, the notification frame is received by the communication control apparatus 10, and not received by the reception node 60a and the reception node 60b.

The comparator 22 of the communication control apparatus 10 obtains the notification frame via the receiver 13. The comparator 22 obtains, from the MAC table 31, the MAC 3 associated with the detection target ID (=234) within the notification frame. The comparator 22 makes a comparison between the MAC 3 and the MAC 4 reported by the notification frame (step S81). When the MAC 3 and the MAC 4 match, the comparator 22 determines that a replay attack against the ID=234 has not been detected ("YES" in step S81). In contrast, when the MAC 3 and the MAC 4 do not match, the comparator 22 determines that the replay attack against the ID=234 has been detected ("NO" in step S81, step S82). The comparator 22 transmits a signal for issuing a request to abort the process of a frame having the ID=234 to the reception node 60b via the connection wire 72b (step S83).

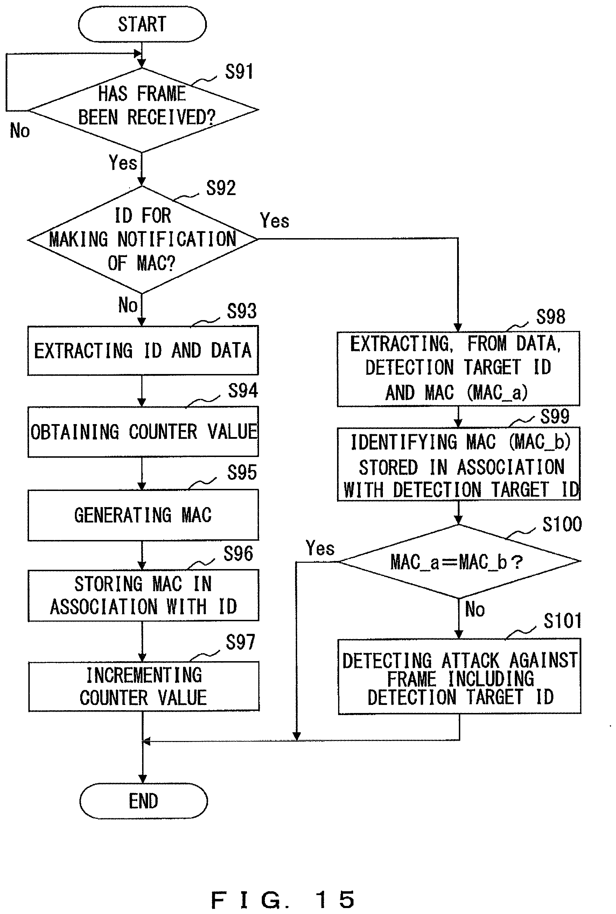

FIG. 15 is a flowchart for explaining an example of the process executed by the communication control apparatus in the second embodiment. A process in steps S91 to S97 is similar to that executed in steps S41 to S47 described with reference to FIG. 11, except in a difference in the number of bits of a MAC. When an ID used to identify a received frame is an ID for making a notification of a MAC, the comparator 22 extracts a detection target ID and a MAC (MAC_a) from the data of the received frame ("YES" in step S92, step S98) . The comparator 22 obtains a MAC (MAC_b) that is stored in the MAC table 31 in association with the detection target ID (step S99). The comparator 22 makes a comparison between the MAC_a and the MAC_b (step S100). When the MAC_a and the MAC_b match, the comparator 22 determines that a replay attack against the detection target ID has not been detected, and terminates the process ("YES" in step S100) . In contrast, when the MAC_a and the MAC_b do not match, the comparator 22 determines that the replay attack against the detection target ID has been detected ("NO" in step S100, step S101). Thereafter, the comparator 22 executes processes such as a process for making a notification to the reception node 60 due to the detection of the replay attack.

As described above, in the second embodiment, a replay attack can be detected while preventing a load imposed on the reception node 60 from being increased even though a plurality of IDs are used to transmit and receive a data frame.

Similarly to the first embodiment, the process executed after a replay attack has been detected may be changed to that executed via the management device 75 in accordance with the type of a device included in the network.

### <Third embodiment>

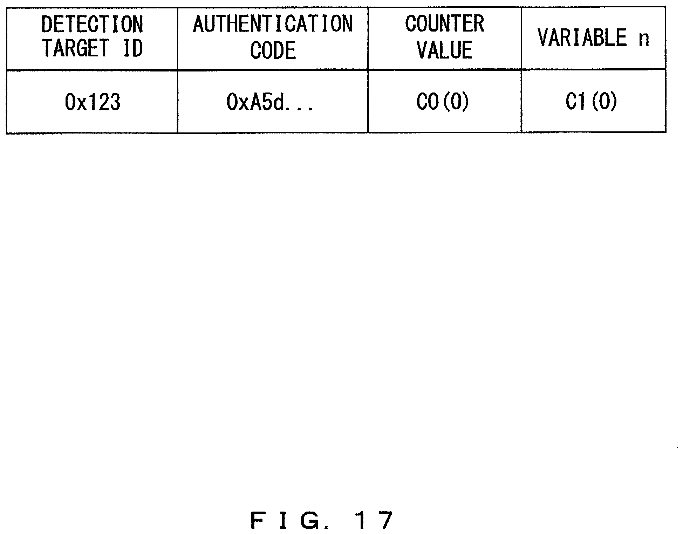

A third embodiment refers to a case where the transmission node 40 transmits an authentication code generated by using MACs obtained from a plurality of transmitted data frames after the transmission node 40 has transmitted the data frames. The communication control apparatus 10 used in the third embodiment stores an authentication code table 32 (FIG. 17) as a replacement for the MAC table 31. For ease of understanding, the following description is provided by taking, as an example, a case where the third embodiment is applied to the network N1 (FIG. 7). The third embodiment, however, is applicable to a network including an arbitrary number of transmission nodes 40 and an arbitrary number of reception nodes 60.

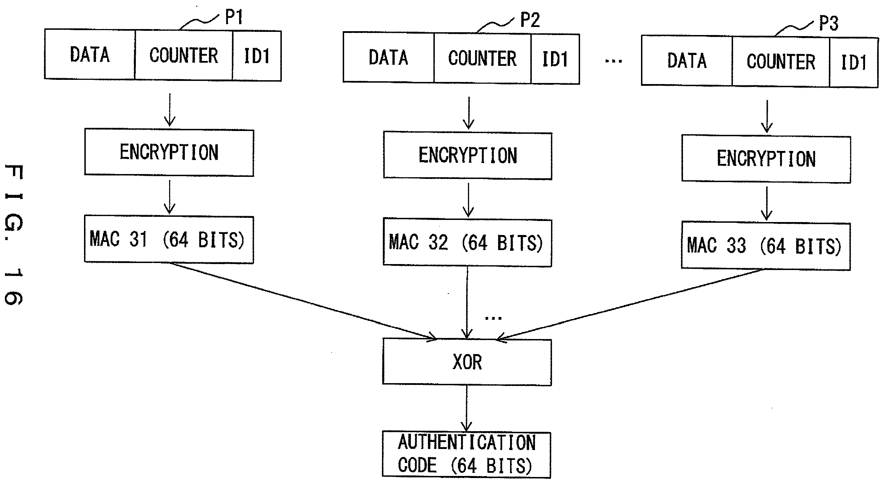

FIG. 16 is an explanatory diagram of an example of an authentication code generation method. FIG. 16 illustrates an example of a case where an ID 1 is a detection target ID. Assume that an authentication code is generated by using frames F31 to F33 (not illustrated). A plain text P1 is a bit string obtained by concatenating data within the frame F31, a counter value used when the frame F31 is transmitted, and an ID used to identify the frame F31. Similarly, a plain text P2 is a bit string obtained by concatenating data within the frame F32, a counter value, and an ID. Moreover, a plain text P3 is a bit string obtained by concatenating data within the frame F33, a counter value and an ID. The plain texts P1 to P3 are encrypted, and MACs 31 to 33 are respectively obtained from the encrypted texts . A process for generating the MACs respectively from the plain texts is similar to that described with reference to FIG. 9.

Thereafter, an authentication code is obtained by performing a computation for the MACs. In the example illustrated in FIG. 16, an authentication code is calculated by performing an exclusive OR (XOR) for the MACs 31 to 33. Due to space limitations, FIG. 16 illustrates the case where the authentication code is calculated from three frames or more. However, the number of frames used to calculate an authentication code is arbitrary.

FIG. 16 has been explained by taking, as an example, the case where the authentication code is 64 bits. However, the authentication code may be a value smaller than 64 bits. In this case, the length of each MAC used to generate the authentication code is shorter than 64 bits. For example, when a MAC generated from a data frame is 53 bits, the authentication code also becomes 53 bits.

FIG. 17 illustrates an example of the authentication code table 32. The authentication code table 32 includes a detection target ID, an authentication code, a counter value, and a variable n. The authentication code is that calculated by using the same number of frames as the variable n among data frames transmitted by using the detection target ID. The variable n is a value used to count the number of data frames utilized to calculate the authentication code. Similarly to the first and the second embodiments, the counter value is generated by the counter 14, and used to generate a MAC.

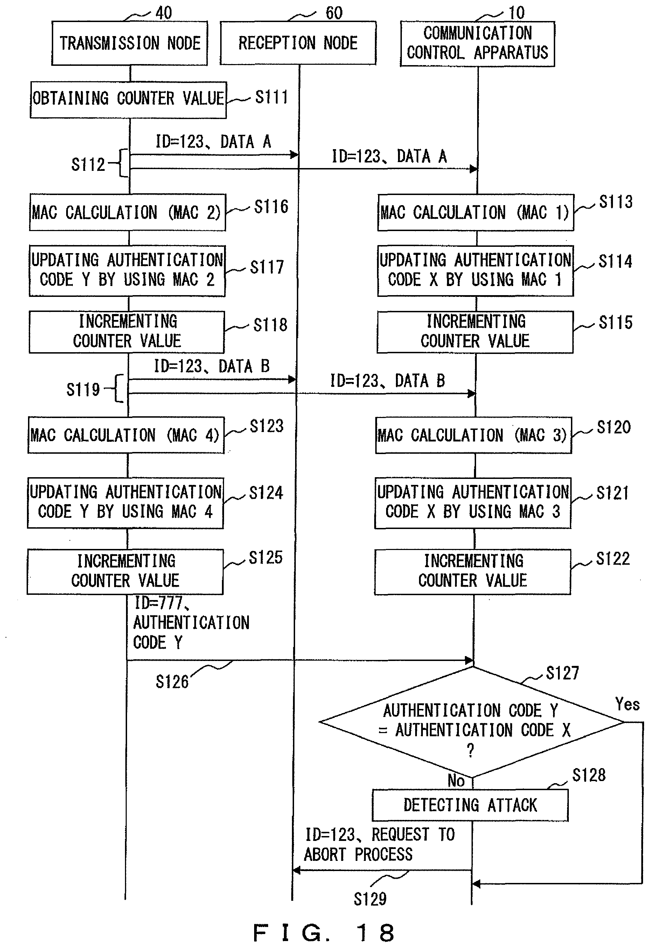

FIG. 18 is a sequence diagram for explaining an example of a control method in the third embodiment. The example is of a process executed when one notification frame is transmitted when two data frames are transmitted. Also, the example illustrated in FIG. 18 assumes that the ID=123 and the ID=777 are respectively used for a data frame and a notification frame. Moreover, an authentication code that the communication control apparatus 10 generates and updates, and an authentication code that the transmission node 40 generates and updates are respectively represented as an authentication code X and an authentication code Y in order to easily identify a device that generates an authentication code. The example illustrated in FIG. 18 assumes a case where an ID used to transmit and receive a frame is of one type.

Values associated with the ID=123 are as follows in the authentication code table 32 held by the communication control apparatus 10 when the process of step S111 is started.
detection target ID = 123
authentication code X = 0
counter value = C1
variable n = 0

It is also assumed that the authentication code Y stored in the transmission node 40 and the number of frames used to generate the authentication code are initialized to 0. It is assumed that the notification frame generator 53 manages the authentication code Y and the number of frames used to calculate the authentication code Y in the transmission node 40.

The MAC generator 51 within the transmission node 40 obtains a counter value when a data frame is transmitted (step S111). After the data frame generator 52 has generated a data frame including the data A, the data frame generator 52 broadcasts the generated data frame via the transmitter 42 (step S112). The data frame is received by both the reception node 60 and the communication control apparatus 10.

When the MAC generator 21 of the communication control apparatus 10 has obtained the data frame via the receiver 13, the generator calculates a MAC (MAC 1) (step S113). The MAC generator 21 updates the authentication code (authentication code X) within the authentication code table 32 by using the MAC 1 (step S114) . With the process of step S114, the initial value of the authentication code is replaced with the MAC 1 in the authentication code table 32. Moreover, the MAC generator 21 increments the variable n associated with the ID=123. Additionally, the counter 14 increments the counter value (step S115). Accordingly, the following information items are recorded in the authentication code table 32 at a point in time when the process of step S115 has been terminated.
detection target ID = 123
authentication code = MAC 1
counter value = C2
variable n = 1

In the meantime, also in the transmission node 40, the MAC generator 51 generates a MAC (MAC 2) after the data frame including the data A has been transmitted (step S116). The notification frame generator 53 updates the authentication code Y by using the MAC 2 (step S117) . At this time, the notification frame generator 53 stores the information that one data frame is used to generate the authentication code Y. The counter 44 increments the counter value used to calculate a MAC in the transmission node 40 (step S118).

Next, the transmission node 40 broadcasts a data frame including the data B (step S119). The process of step S119 is similar to that of step S112. Also the data frame including the data B is received by both the reception node 60 and the communication control apparatus 10.

The MAC generator 21 of the communication control apparatus 10 obtains the data frame including the data B via the receiver 13, and calculates a MAC (MAC 3) (step S120) . The MAC generator 21 updates the authentication code X within the authentication code table 32 by using the MAC 3 (step S121) . With the process of step S121, the authentication code X becomes a value obtained by performing an XOR for the MAC 1 and the MAC 3. Moreover, the MAC generator 21 increments the variable n associated with the ID=123. Additionally, the counter 14 increments the counter value (step S122).

In the meantime, also in the transmission node 40, the MAC generator 51 generates a MAC (MAC 4) by using the data frame including the data B (step S123). The notification frame generator 53 updates the authentication code Y by using the MAC 4 (step S124) . The counter 44 increments the counter value used to calculate a MAC in the transmission node 40 (step S125).

Incidentally, the authentication code Y after being updated is generated by using the two data frames because of the update of the authentication code Y. Accordingly, the notification frame generator 53 generates a notification frame that includes the authentication code Y in the data field, and broadcasts the notification frame after the notification frame generator 53 has set the ID of the notification frame to 777 (step S126). The notification frame is received by the communication control apparatus 10 without being received by the reception node 60.

The comparator 22 of the communication control apparatus 10 obtains the notification frame via the receiver 13. The comparator 22 makes a comparison between the authentication code Y reported by the notification frame and the authentication code X recorded in the MAC table 31 (step S127). When the authentication code Y and the authentication code X match, the comparator 22 determines that a replay attack against the ID=123 has not been detected, and terminates the process ("YES" in step S127). In contrast, when the authentication code Y and the authentication code X do not match, the comparator 22 determines that the replay attack against the ID=123 has been detected ("NO" in step S127, step S128) . The comparator 22 transmits a signal for issuing a request to abort the process of a frame having the ID=123 to the reception node 60 via the connection wire 72 (step S129).

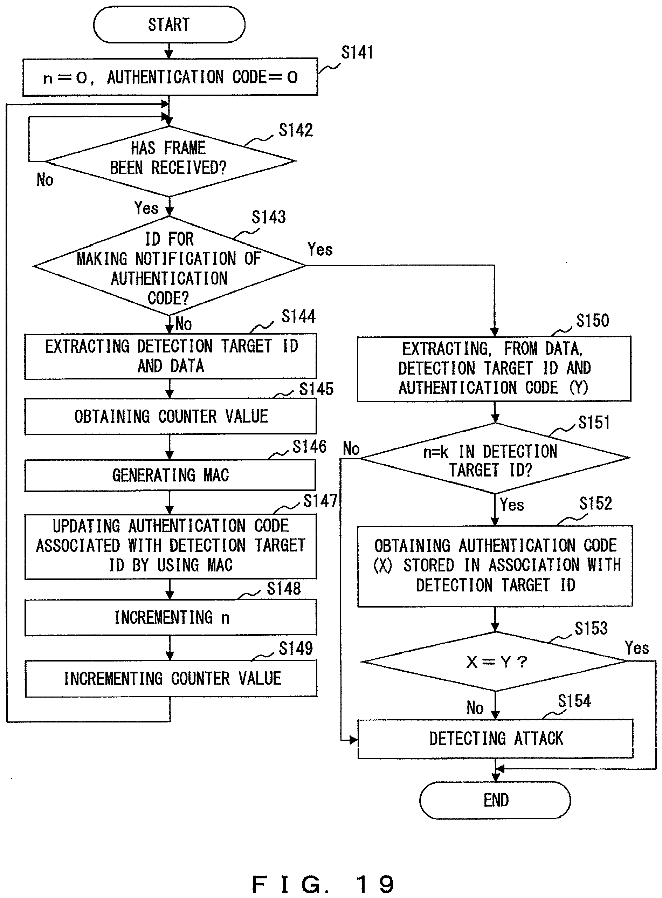

The example in the case where only the authentication code is included in the data field of the notification frame has been described with reference to FIGs. 16 to 18. When the length of the authentication code is smaller than 64 bits, the notification frame may include information other than the authentication code in the data field. For example, when the authentication code is 53 bits, a frame obtained by replacing the MAC of the frame F21 with the authentication code is available. By modifying the notification frame in this way, a detection target ID is included in the frame. Therefore, the third embodiment is applicable to even a case where a plurality of IDs are used to transmit and receive a data frame. An example of the process executed within the system that also supports the case where a plurality of IDs are used to transmit and receive a data frame is described with reference to FIG. 19.

FIG. 19 is a flowchart for explaining an example of the process executed by the communication control apparatus 10 in the third embodiment. In FIG. 19, a constant k is used. The constant k is the number of data frames transmitted before the transmission node 40 transmits a notification frame. Accordingly, an authentication code within the notification frame is generated from the same number of data frames as the constant k.

The comparator 22 sets the variable n to 0, and also sets, to 0, the authentication code X within the authentication code table 32 (step S141) . Here, the process of step S141 is executed when the communication control apparatus 10 starts to operate, and is also executed each time a comparison process of the comparator 22 is terminated. The receiver 13 waits until it receives a frame ("NO" in step S142). Upon receipt of a frame, the receiver 13 determines whether the ID of the received frame is an ID for making a notification of an authentication code ("YES" in step S142, step S143).

When the ID of the received frame is not the ID for making a notification of an authentication code, the receiver 13 outputs the received frame to the MAC generator 21 ("NO" in step S143) . The MAC generator 21 extracts the ID and data from the received frame (step S144). The MAC generator 21 obtains a counter value (step S145) . The MAC generator 21 generates a MAC by using the ID, the data and the counter value (step S146). The MAC generator 21 updates the authentication code associated with the ID (detection target ID) of the received frame by using the MAC (step S147). The MAC generator 21 increments the variable n (step S148). Next, the counter 14 increments the counter value (step S149). Thereafter, the process returns to step S142.

When the ID of the received frame is that for making a notification of an authentication code, the receiver 13 outputs the received frame to the comparator 22 ("YES" in step S143) . The comparator 22 extracts the detection target ID, and the authentication code (authentication code Y) calculated by the transmission node 40 (step S150) . The comparator 22 determines whether the value of the variable n within the entry associated with the detection target ID in the authentication code table 32 and the constant k match (step S151) . When the value of the variable n and the constant k do not match, there is a possibility that a frame not transmitted by the transmission node 40 has been transmitted from an attacker by using the detection target ID ("NO" in step S151). Accordingly, the comparator 22 determines that the attack against the detection target ID has been detected (step S154).

When the value of the variable n and the constant k match, the comparator 22 obtains the authentication code (authentication code X) that is stored in the authentication code table 32 in association with the detection target ID ("YES" in step S151, step S152) . Moreover, the comparator 22 makes a comparison between the authentication code X and the authentication code Y (step S153) . When the authentication code X and the authentication code Y match, the comparator 22 determines that the attack against the detection target ID has not been detected, and terminates the process ("YES" in step S153). When the authentication code X and the authentication code Y do not match, the comparator 22 determines that the attack has been detected ("NO" in step S153, step S154). Thereafter, the comparator 22 issues a request to abort the process of the frame identified on the basis of the ID with which the attack has been detected, to the reception node 60 via the connection wire 72.

According to the third embodiment, one notification frame is transmitted every time k data frames are transmitted from the transmission node 40. Namely, the number of frames to be processed for determining the validity of the k data frames is k+1. In contrast, in the first and the second embodiments, one notification frame is transmitted for one data frame. Therefore, 2k frames are processed to determine the legality of k data frames. Accordingly, the processing load imposed on the communication control apparatus 10 is lighter than that of the first and the second embodiments, thereby increasing the processing speed.

With embodiments including the above described first to third embodiments, a replay attack can be detected while lightening a load imposed on a device that receives a frame.

### <Others>

Embodiments are not limited to the above described ones, and can be variously modified. For instance, the MAC table 31, the authentication code table 32 and the frame format are merely examples, and can be changed in accordance with an implementation.

Additionally, in the third embodiment, a combination of counter values used when each authentication code is calculated differs for each authentication code. Then a counter value does not always differ for each MAC. Accordingly, the communication control apparatus 10 and the transmission node 40 may use the same counter value when a MAC is calculated from k data frames that are evaluated on the basis of one authentication code. In this case, the transmission node 40 increments the counter value each time the node transmits a notification frame. Also, the communication control apparatus 10 increments the counter value after the apparatus performs a determination using an authentication code.

The above description has been provided by taking, as the example, the case where a frame having general specifications of a CAN is transmitted and received. The above described embodiments are also applicable in a case where a frame having extended specifications of the CAN, or a frame used in a CAN FD (CAN with Flexible Data-Rate) is transmitted and received.

Additionally, in the second and the third embodiments also, the process executed when the communication control apparatus 10 has detected a replay attack may be modified as earlier stated in the modification example of the first embodiment. Additionally, the process executed after a replay attack is detected may be determined by a user depending on the system.

## Claims

1. A communication control apparatus (10), comprising:
a receiver (13) configured to receive, from a first node (40), data including first identification information or second identification information, the first identification information identifying data addressed to a second node (60) which does not execute a process for detecting a replay attack and which does not receive a frame including an authentication code, the second identification information identifying data which is not received by the second node, the first node and the second node being connected to a Controller Area Network, CAN; and
a controller (20) configured to generate a first authentication code by using first data, when the receiver has received the first data including the first identification information, wherein
the receiver (13) receives, from the first node (40), second data including the second identification information and a second authentication code that the first node has generated by using the first data, and
the controller (20) decides whether to make the second node (60) abort a process of the data reported using the first identification information, on the basis of a result of a comparison between the first authentication code and the second authentication code, the comparison is executed to verify whether the replay attack has occurred;
wherein the first authentication codes are generated by using the first data and a first counter value of a first counter in the communication control apparatus (10) and the second authentication codes are generated by using the first data and a second counter value of a second counter in the first node (40),
wherein a common initial value is given to the first counter and the second counter and said counter values are respectively different for each frame.

2. The communication control apparatus (10) according to claim 1, wherein
the controller (20) further uses third data to generate the first authentication code, when the receiver has received, from the first node (40), the third data along with the first identification information in a time period from a reception of the first data to a reception of the second data,
the second authentication code is generated from data that the first node has transmitted by using the first identification information in a time period from a transmission of the first data to a transmission of the second data, and
the controller (20) makes the second node (60) abort the process of the data reported using the first identification information, when the first authentication code and the second authentication code do not match.

3. The communication control apparatus (10) according to claim 2, further comprising
a storage unit (30) configured to store a predetermined value as the number of transmissions of data that the first node (40) transmits by using the first identification information until the first node transmits the second data, wherein
the controller (20) makes the second node (60) abort the process of the data reported using the first identification information, when the number of pieces of data used to generate the first authentication code and the number of transmissions do not match at a point in time when the second authentication code has been obtained.

4. The communication control apparatus according to any one of claims 1 to 3, wherein:
the receiver (13) further receives, from a third node (40b), data including the second identification information or third identification information;
the data including the second identification information includes a value that indicates identification information as a determination target for which whether to abort the process is to be determined; and
the controller (20)
stores the first authentication code in association with the first identification information, generates a third authentication code by using fourth data including the third identification information and stores the third authentication code in association with the third identification information,
recognizes the first identification information as the determination target and makes a comparison between a fourth authentication code within fifth data and the first authentication code when the receiver has received the fifth data, in which the first identification information is associated with the fourth authentication code calculated by the first node, by using the second identification information,
recognizes the third identification information as the determination target and makes a comparison between a fifth authentication code within sixth data and the third authentication code when the receiver has received the sixth data, in which the third identification information is associated with the fifth authentication code calculated by the third node, by using the second identification information, and
determines whether to abort the process by using a result of the comparison.

5. A communication control method for performing a communication control among a plurality of nodes, the method comprising:
receiving (s2), from a first node (40), first data including first identification information, the first identification information identifying data addressed to a second node (60) which does not execute a process for detecting a replay attack and which does not receive a frame including an authentication code;
generating (s3) a first authentication code by using the received first data;
receiving (s5), from the first node(40), second data including second identification information and a second authentication code that the first node has generated by using the first data, the second identification information identifying data which is not received by the second node, the first node and the second node being connected to a Controller Area Network, CAN;
making a comparison (s6) between the first authentication code and the second authentication code to verify whether the replay attack has occurred; and
determining (S7) whether to make the second node abort a process of the data reported using the first identification information, on the basis of a result of the comparison;
wherein the first authentication codes are generated by using the first data and a first counter value of a first counter in a communication control apparatus (10) and the second authentication codes are generated by using the first data and a second counter value of a second counter in the first node (4),
wherein a common initial value is given to the first counter and the second counter and said counter values are respectively different for each frame.

6. The communication control method according to claim 5, wherein
third data is further used to generate the first authentication code (s121), when the third data has been received from the first node (40) along with the first identification information in a time period from a reception of the first data to a reception of the second data,
the second authentication code is generated (s124) from the data that the first node has transmitted by using the first identification information in a time period from a transmission of the first data to a transmission of the second data, and
the second node is made to abort the process of the data reported using the first identification information, when the first authentication code and the second authentication code do not match (s129).

7. The communication control method according to claim 6, wherein
the second node is made to abort the process of the data reported using the first identification information, when the number of pieces of data used to generate the first authentication code and a value predetermined as the number of transmissions of data transmitted by using the first identification information until the first node transmits the second data do not match at a point in time when the second authentication code has been obtained (s151, sl54).

8. The communication control method according to any one of claims 5 to 7, further comprising:
storing (s65) the first authentication code in association with the first identification information;
generating (s72) a third authentication code by using fourth data and storing the third authentication code in association with third identification information, when the fourth data including the third identification information has been received from a third node;
making a comparison (s77) between a fourth authentication code within fifth data and the first authentication code, when the fifth data, in which the first identification information is associated with the fourth authentication code calculated by the first node, has been received by using the second identification information;
making a comparison (s81) between a fifth authentication code within sixth data and the third authentication code, when the sixth data, in which the third identification information is associated with the fifth authentication code calculated by the third node, has been received by using the second identification information; and
determining whether to abort the process by using a result of the comparison.

9. A communication control program for causing a communication control apparatus performing a communication control among a plurality of nodes to execute a process comprising:
receiving (s2), from a first node, first data including first identification information, the first identification information identifying data addressed to a second node (60) which does not execute a process for detecting a replay attack and which does not receive a frame including an authentication code;
generating (s3) a first authentication code by using the received first data;
receiving (s5), from the first node, second data including second identification information and a second authentication code that the first node has generated by using the first data, the second identification information identifying data which is not received by the second node, the first node and the second node being connected to a Controller Area Network, CAN;
making a comparison (s6) between the first authentication code and the second authentication code to verify whether the replay attack has occurred; and
determining(S7) whether to make the second node abort a process of the data reported using the first identification information, on the basis of a result of the comparison;
wherein the first authentication codes are generated by using the first data and a first counter value of a first counter in the communication control apparatus (10) and the second authentication codes are generated by using the first data and a second counter value of a second counter in the first node (40),
wherein a common initial value is given to the first counter and the second counter and said counter values are respectively different for each frame.

10. The communication control program according to claim 9, wherein the process further comprises:
further using third data in order to generate the first authentication code(s121), when the third data has been received from the first node (40) along with the first identification information in a time period from a reception of the first data to a reception of the second data;
generating (s124) the second authentication code from the data that the first node has transmitted by using the first identification information in a time period from a transmission of the first data to a transmission of the second data; and
making the second node abort (s129) the process of the data reported using the first identification information, when the first authentication code and the second authentication code do not match.

11. The communication control program according to claim 10, wherein the process further comprises
making the second node abort (s154) the process of the data reported using the first identification information, when the number of pieces of data used to generate the first authentication code and a value predetermined as the number of transmissions of data transmitted by using the first identification information until the first node transmits the second data do not match at a point in time when the second authentication code has been obtained.

12. The communication control program according to any one of claims 9 to 11, wherein the process further comprises:
Storing (s65) the first authentication code in association with the first identification information;
Generating (s72) a third authentication code by using fourth data and storing the third authentication code in association with third identification information, when the fourth data including the third identification information has been received from a third node;
making a comparison (s77) between a fourth authentication code within fifth data and the first authentication code, when the fifth data, in which the first identification information is associated with the fourth authentication code calculated by the first node, has been received by using the second identification information;
making a comparison (s81)between a fifth authentication code within sixth data and the third authentication code, when the sixth data, in which the third identification information is associated with the fifth authentication code calculated by the third node, has been received by using the second identification information; and
determining whether to abort the process by using a result of the comparison.

## Patentansprüche

1. Kommunikationssteuerungsvorrichtung (10), umfassend:
einen Empfänger (13), der dafür konfiguriert ist, von einem ersten Knoten (40) Informationen aufweisend erster Identifizierungsinformationen oder zweiter Identifizierungsinformationen zu empfangen, wobei die ersten Identifizierungsinformationen Informationen identifizieren, die an einen zweiten Knoten (60) adressiert sind, der keinen Prozess zur Erkennung eines Replay-Angriffs ausführt und der keinen Frame aufweisend eines Authentifizierungscodes empfängt, wobei die zweiten Identifizierungsinformationen Informationen identifizieren, die nicht von dem zweiten Knoten empfangen werden, wobei der erste Knoten und der zweite Knoten an ein Steuervorrichtungnetz, CAN, angeschlossen sind; und
ein Steuervorrichtung (20), das dafür konfiguriert ist, einen ersten Authentifizierungscode unter Anwendung erster Informationen zu erzeugen, wenn der Empfänger die ersten Informationen einschließlich der ersten Identifizierungsinformationen empfangen hat, wobei
der Empfänger (13) von einem ersten Knoten (40) zweite Informationen aufweist der zweiten Identifizierungsinformationen und eines zweiten Authentifizierungscodes empfängt, den der erste Knoten unter Anwendung der ersten Informationen erzeugt hat, und
das Steuervorrichtung (20) entscheidet, ob der zweite Knoten (60) dazu gebracht wird, eine Verarbeitung der gemeldeten Informationen unter Anwendung der ersten Identifizierungsinformationen abzubrechen, auf der Grundlage eines Ergebnisses eines Vergleichs zwischen dem ersten Authentifizierungscode und dem zweiten Authentifizierungscode, wobei der Vergleich durchgeführt wird, um zu überprüfen, ob der Replay-Angriff stattgefunden hat;
wobei die ersten Authentifizierungscodes unter Anwendung der ersten Informationen und eines ersten Zählerwerts eines ersten Zählers in dem Kommunikationssteuerungsvorrichtung (10) erzeugt werden und die zweiten Authentifizierungscodes unter Anwendung der ersten Informationen und eines zweiten Zählerwerts eines zweiten Zählers in dem ersten Knoten (40) erzeugt werden,
wobei dem ersten Zähler und dem zweiten Zähler ein gemeinsamer Ausgangswert gegeben wird und die Zählerwerte jeweils unterschiedlich für jeden Frame sind.

2. Kommunikationssteuerungsvorrichtung (10) nach Anspruch 1, wobei
das Steuervorrichtung (20) weiter dritte Informationen verwendet, um den ersten Authentifizierungscode zu erzeugen, wenn der Empfänger von dem ersten Knoten (40) die dritten Informationen gemeinsam mit den ersten Identifizierungsinformationen empfangen hat, in einem Zeitraum von einem Empfang der ersten Informationen bis zu einem Empfang der zweiten Informationen,
der zweite Authentifizierungscode aus Informationen erzeugt wird, die der erste Knoten unter Anwendung der ersten Identifizierungsinformationen übertragen hat, in einem Zeitraum von einer Übertragung der ersten Informationen bis zu einer Übertragung der zweiten Informationen, und
das Steuervorrichtung (20) den zweiten Knoten (60) dazu bringt, die Verarbeitung der gemeldeten Informationen abzubrechen, unter Anwendung der ersten Identifizierungsinformationen, wenn der erste Authentifizierungscode und der zweite Authentifizierungscode nicht zusammenpassen.

3. Kommunikationssteuerungsvorrichtung (10) nach Anspruch 2, weiter umfassend
eine Speichereinheit (30), die dafür konfiguriert ist, einen vorgegebenen Wert als die Anzahl von Informationenübertragungen zu speichern, die der erste Knoten (40) überträgt, unter Anwendung der ersten Identifizierungsinformationen, bis der erste Knoten die zweiten Informationen überträgt, wobei
das Steuervorrichtung (20) den zweiten Knoten (60) dazu bringt, die Verarbeitung der gemeldeten Informationen unter Anwendung der ersten Identifizierungsinformationen abzubrechen, wenn die Anzahl von Informationenstücken, die verwendet werden, um den ersten Authentifizierungscode zu erzeugen und die Anzahl der Übertragungen zu einem Zeitpunkt nicht zusammenpassen, in dem der zweite Authentifizierungscode erhalten wurde.

4. Kommunikationssteuerungsvorrichtung nach einem der Ansprüche 1 bis 3, wobei:
der Empfänger (13) weiter von einem dritten Knoten (40b) Informationen umfassend der zweiten Identifizierungsinformationen oder dritten Identifizierungsinformationen empfängt;
die Informationen einschließlich der zweiten Identifizierungsinformationen einen Wert aufweist, der Identifizierungsinformationen als einen Ermittlungszielwert anzeigt, für den bestimmt werden muss, ob die Verarbeitung abgebrochen werden soll; und
das Steuervorrichtung (20)
den ersten Authentifizierungscode in Verbindung mit den ersten Identifizierungsinformationen speichert, einen dritten Authentifizierungscode unter Anwendung vierter Informationen aufweisend der dritten Identifizierungsinformationen erzeugt und den dritten Authentifizierungscode in Verbindung mit den dritten Identifizierungsinformationen speichert,
die ersten Identifizierungsinformationen als den Ermittlungszielwert erkennt und einen Vergleich zwischen einem vierten Authentifizierungscode innerhalb fünfter Informationen und dem ersten Authentifizierungscode durchführt, wenn der Empfänger die fünften Informationen empfangen hat, in denen die ersten Identifizierungsinformationen mit dem vierten Authentifizierungscode in Verbindung gebracht werden, der von dem ersten Knoten berechnet wurde, unter Anwendung der zweiten Identifizierungsinformationen,
die dritten Identifizierungsinformationen als den Ermittlungszielwert erkennt und einen Vergleich zwischen einem fünften Authentifizierungscode innerhalb sechster Informationen und dem dritten Authentifizierungscode durchführt, wenn der Empfänger die sechsten Informationen empfangen hat, in denen die dritten Identifizierungsinformationen mit dem fünften Authentifizierungscode in Verbindung gebracht werden, der von dem dritten Knoten berechnet wurde, unter Anwendung der zweiten Identifizierungsinformationen, und
bestimmt, ob die Verarbeitung unter Anwendung eines Ergebnisses des Vergleichs abgebrochen werden soll.

5. Kommunikationssteuerungsverfahren zur Durchführung einer Kommunikationssteuerung unter einer Vielzahl von Knoten, wobei das Verfahren umfasst:
Empfangen (s2) von einem ersten Knoten (40) erster Informationnen einschließlich erster Identifizierungsinformationen, wobei die ersten Identifizierungsinformationen Informationen identifizieren, die an einen zweiten Knoten (60) adressiert sind, der keinen Prozess zur Erkennung eines Replay-Angriffs ausführt und der keinen Frame aufweisend eines Authentifizierungscodes empfängt;
Erzeugen (s3) eines ersten Authentifizierungscodes unter Anwendung der empfangenen ersten Informationen;
Empfangen (s5) von dem ersten Knoten (40) zweiter Informationen aufwesiend zweiter Identifizierungsinformationen und eines zweiten Authentifizierungscodes, den der erste Knoten erzeugt hat, unter Anwendung der ersten Informationen, wobei die zweiten Identifizierungsinformationen Informationen identifizieren, die nicht von dem zweiten Knoten empfangen werden, wobei der erste Knoten und der zweite Knoten an ein Steuergvorrichtungnetz, CAN, angeschlossen sind;
Durchführen eines Vergleichs (s6) zwischen dem ersten Authentifizierungscode und dem zweiten Authentifizierungscode, um zu überprüfen, ob der Replay-Angriff stattgefunden hat; und
Bestimmen (S7), ob der zweite Knoten dazu gebracht wird, eine Verarbeitung der gemeldeten Informationen abzubrechen, unter Anwendung der ersten Identifizierungsinformationen, auf der Grundlage eines Ergebnisses des Vergleichs;
wobei die ersten Authentifizierungscodes unter Anwendung der ersten Informationen und eines ersten Zählerwerts eines ersten Zählers in einem Kommunikationssteuerungsvorrichtung (10) erzeugt werden und die zweiten Authentifizierungscodes unter Anwendung der ersten Informationen und eines zweiten Zählerwerts eines zweiten Zählers in dem ersten Knoten (4) erzeugt werden,
wobei dem ersten Zähler und dem zweiten Zähler ein gemeinsamer Ausgangswert gegeben wird und die Zählerwerte jeweils unterschiedlich für jeden Frame sind.

6. Kommunikationssteuerungsverfahren nach Anspruch 5, wobei
dritte Informationenweiter verwendet werden, um den ersten Authentifizierungscode (s121) zu erzeugen, wenn die dritten Informationen von dem ersten Knoten (40) empfangen wurden, gemeinsam mit den ersten Identifizierungsinformationen, in einem Zeitraum von einem Empfang der ersten Informationen bis zu einem Empfang der zweiten Informationen,
der zweite Authentifizierungscode aus Informationen erzeugt wird (s124), die der erste Knoten unter Anwendung der ersten Identifizierungsinformationen übertragen hat, in einem Zeitraum von einer Übertragung der ersten Informationen bis zu einer Übertragung der zweiten Informationen, und
der zweite Knoten dazu gebracht wird, die Verarbeitung der gemeldeten Informationen abzubrechen, unter Anwendung der ersten Identifizierungsinformationen, wenn der erste Authentifizierungscode und der zweite Authentifizierungscode nicht zusammenpassen (s129).

7. Kommunikationssteuerungsverfahren nach Anspruch 6, wobei
der zweite Knoten dazu gebracht wird, die Verarbeitung der gemeldeten Informationen unter Anwendung der ersten Identifizierungsinformationen abzubrechen, wenn die Anzahl von Informationenstücken, die verwendet werden, um den ersten Authentifizierungscode zu erzeugen und ein Wert, der als die Anzahl von Informationenübertragungen vorbestimmt wird, die unter Anwendung der ersten Identifizierungsinformationen übertragen werden, bis der erste Knoten die zweiten Informationen überträgt, zu einem Zeitpunkt nicht zusammenpassen, in dem der zweite Authentifizierungscode aufweisen wurde (s151, s154).

8. Kommunikationssteuerungsverfahren nach einem der Ansprüche 5 bis 7, weiter umfassend:
Speichern (s65) des ersten Authentifizierungscodes in Verbindung mit den ersten Identifizierungsinformationen;
Erzeugen (s72) eines dritten Authentifizierungscodes unter Anwendung vierter Informationen und Speichern des dritten Authentifizierungscodes in Verbindung mit dritten Identifizierungsinformationen, wenn die vierten Informationen aufweisend der dritten Identifizierungsinformationen von einem dritten Knoten empfangen wurden;
Durchführen eines Vergleichs (s77) zwischen einem vierten Authentifizierungscode innerhalb fünfter Informationen und dem ersten Authentifizierungscode, wenn die fünften Informationen, in denen die ersten Identifizierungsinformationen mit dem vierten Authentifizierungscode in Verbindung gebracht werden, der von dem ersten Knoten berechnet wurde, unter Anwendung der zweiten Identifizierungsinformationen empfangen wurden;
Durchführen eines Vergleichs (s81) zwischen einem fünften Authentifizierungscode innerhalb sechster Informationen und dem dritten Authentifizierungscode, wenn die sechsten Informationen, in denen die ersten Identifizierungsinformationen mit dem fünften Authentifizierungscode in Verbindung gebracht werden, der von dem dritten Knoten berechnet wurde, unter Anwendung der zweiten Identifizierungsinformationen empfangen wurden; und
Bestimmen, ob die Verarbeitung unter Anwendung eines Ergebnisses des Vergleichs abgebrochen werden soll.

9. Kommunikationssteuerungsprogramm zur Veranlassung eines Kommunikationssteuerungsvorrichtung, eine Kommunikationssteuerung unter einer Vielzahl von Knoten durchzuführen, um einen Prozess auszuführen, der umfasst:
Empfangen (s2) von einem ersten Knoten erster Informationen aufweisend erster Identifizierungsinformationen, wobei die ersten Identifizierungsinformationen Informationen identifizieren, die an einen zweiten Knoten (60) adressiert sind, der keinen Prozess zur Erkennung eines Replay-Angriffs ausführt und der keinen Frame aufweisend eines Authentifizierungscodes empfängt;
Erzeugen (s3) eines ersten Authentifizierungscodes unter Anwendung der empfangenen ersten Informationen;
Empfangen (s5) von dem ersten Knoten zweiter Informationen aufweisend zweiter Identifizierungsinformationen und eines zweiten Authentifizierungscodes, den der erste Knoten erzeugt hat, unter Anwendung der ersten Informationen, wobei die zweiten Identifizierungsinformationen Informationen identifizieren, die nicht von dem zweiten Knoten empfangen werden, wobei der erste Knoten und der zweite Knoten an ein Steuervorrichtungnetz, CAN, angeschlossen sind;
Durchführen eines Vergleichs (s6) zwischen dem ersten Authentifizierungscode und dem zweiten Authentifizierungscode, um zu überprüfen, ob der Replay-Angriff stattgefunden hat; und
Bestimmen (S7), ob der zweite Knoten dazu gebracht wird, eine Verarbeitung der gemeldeten Informationen abzubrechen, unter Anwendung der ersten Identifizierungsinformationen, auf der Grundlage eines Ergebnisses des Vergleichs;
wobei die ersten Authentifizierungscodes unter Anwendung der ersten Informationen und eines ersten Zählerwerts eines ersten Zählers in dem Kommunikationssteuerungsvorrichtung (10) erzeugt werden und die zweiten Authentifizierungscodes unter Anwendung der ersten Informationen und eines zweiten Zählerwerts eines zweiten Zählers in dem ersten Knoten (40) erzeugt werden,
wobei dem ersten Zähler und dem zweiten Zähler ein gemeinsamer Ausgangswert gegeben wird und die Zählerwerte jeweils unterschiedlich für jeden Frame sind.

10. Kommunikationssteuerungsprogramm nach Anspruch 9, wobei der Prozess weiter umfasst:
weiter die Verwendung dritter Informationen, um den ersten Authentifizierungscode (s121) zu erzeugen, wenn die dritten Informationen von dem ersten Knoten (40) gemeinsam mit den ersten Identifizierungsinformationen empfangen wurden, in einem Zeitraum von einem Empfang der ersten Informationen bis zu einem Empfang der zweiten Informationen;
Erzeugen (s124) des zweiten Authentifizierungscodes aus den Informationen, die der erste Knoten unter Anwendung der ersten Identifizierungsinformationen übertragen hat, in einem Zeitraum von einer Übertragung der ersten Informationen bis zu einer Übertragung der zweiten Informationen; und
den zweiten Knoten dazu bringen, die Verarbeitung der gemeldeten Informationen abzubrechen (s129), unter Anwendung der ersten Identifizierungsinformationen, wenn der erste Authentifizierungscode und der zweite Authentifizierungscode nicht zusammenpassen.

11. Kommunikationssteuerungsprogramm nach Anspruch 10, wobei der Prozess weiter umfasst
den zweiten Knoten dazu bringen, die Verarbeitung der gemeldeten Informationen unter Anwendung der ersten Identifizierungsinformationen abzubrechen (s154), wenn die Anzahl von Informationenstücken, die verwendet werden, um den ersten Authentifizierungscode zu erzeugen und ein Wert, der als die Anzahl von Informationenübertragungen vorbestimmt wird, unter Anwendung der ersten Identifizierungsinformationen, bis der erste Knoten die zweiten Informationen überträgt, zu einem Zeitpunkt nicht zusammenpassen, in dem der zweite Authentifizierungscode erhalten wurde.

12. Kommunikationssteuerungsprogramm nach einem der Ansprüche 9 bis 11, wobei der Prozess weiter umfasst:
Speichern (s65) des ersten Authentifizierungscodes in Verbindung mit den ersten Identifizierungsinformationen;
Erzeugen (s72) eines dritten Authentifizierungscodes unter Anwendung vierter Informationen und Speichern des dritten Authentifizierungscodes in Verbindung mit dritten Identifizierungsinformationen, wenn die vierten Informationen aufweisend der dritten Identifizierungsinformationen von einem dritten Knoten empfangen wurden;
Durchführen eines Vergleichs (s77) zwischen einem vierten Authentifizierungscode innerhalb fünfter Informationen und dem ersten Authentifizierungscode, wenn die fünften Informationen, in denen die ersten Identifizierungsinformationen mit dem vierten Authentifizierungscode in Verbindung gebracht werden, der von dem ersten Knoten berechnet wurde, unter Anwendung der zweiten Identifizierungsinformationen empfangen wurden;
Durchführen eines Vergleichs (s81) zwischen einem fünften Authentifizierungscode innerhalb sechster Informationen und dem dritten Authentifizierungscode, wenn die sechsten Informationen, in denen die dritten Identifizierungsinformationen mit dem fünften Authentifizierungscode in Verbindung gebracht werden, der von dem dritten Knoten berechnet wurde, unter Anwendung der zweiten Identifizierungsinformationen empfangen wurden; und
Bestimmen, ob die Verarbeitung unter Anwendung eines Ergebnisses des Vergleichs abgebrochen werden soll.

## Revendications

1. Appareil de commande de communication (10) comprenant :
un récepteur (13) configuré pour recevoir, à partir d'un premier noeud (40), des données comprenant des premières informations d'identification ou des deuxièmes informations d'identification, les premières informations d'identification identifiant des données adressées à un deuxième noeud (60) qui n'exécute pas un processus pour détecter une attaque par rejeu et qui ne reçoit pas une trame comprenant un code d'authentification, les deuxièmes informations d'identification identifiant des données qui ne sont pas reçues par le deuxième noeud, le premier noeud et le deuxième noeud étant connectés à un réseau local de commande, CAN ; et
un dispositif de commande (20) configuré pour générer un premier code d'authentification en utilisant des premières données, quand le récepteur a reçu les premières données comprenant les premières informations d'identification, dans lequel
le récepteur (13) reçoit, à partir du premier noeud (40), des deuxièmes données comprenant les deuxièmes informations d'identification et un deuxième code d'authentification que le premier noeud a généré en utilisant les premières données, et
le dispositif de commande (20) décide s'il faut amener le deuxième noeud (60) à interrompre un processus des données rapportées en utilisant les premières informations d'identification, sur la base d'un résultat d'une comparaison entre le premier code d'authentification et le deuxième code d'authentification, la comparaison est exécutée pour vérifier si l'attaque par rejeu a eu lieu ;
dans lequel les premiers codes d'authentification sont générés en utilisant les premières données et une première valeur de compteur d'un premier compteur dans l'appareil de commande de communication (10) et les deuxièmes codes d'authentification sont générés en utilisant les premières données et une deuxième valeur de compteur d'un deuxième compteur dans le premier noeud (40),
dans lequel une valeur initiale commune est donnée au premier compteur et au deuxième compteur et lesdites valeurs de compteur sont respectivement différentes pour chaque trame.

2. Appareil de commande de communication (10) selon la revendication 1, dans lequel
le dispositif de commande (20) utilise en outre des troisièmes données pour générer le premier code d'authentification, quand le récepteur a reçu, à partir du premier noeud (40), les troisièmes données conjointement aux premières informations d'identification dans une période de temps d'une réception des première données à une réception des deuxièmes données,
le deuxième code d'authentification est généré à partir de données que le premier noeud a transmises en utilisant les premières informations d'identification dans une période de temps d'une transmission des premières données à une transmission des deuxièmes données, et
le dispositif de commande (20) amène le deuxième noeud (60) à interrompre le processus des données rapportées en utilisant les premières informations d'identification, quand le premier code d'authentification et le deuxième code d'authentification ne correspondent pas.

3. Appareil de commande de communication (10) selon la revendication 2, comprenant en outre
une unité de stockage (30) configurée pour stocker une valeur prédéterminée comme le nombre de transmissions de données que le premier noeud (40) transmet en utilisant les premières informations d'identification jusqu'à ce que le premier noeud transmette les deuxièmes données, dans lequel
le dispositif de commande (20) amène le deuxième noeud (60) à interrompre le processus des données rapportées en utilisant les premières informations d'identification, quand le nombre d'éléments de données utilisés pour générer le premier code d'authentification et le nombre de transmissions ne correspondent pas en un point temporel où le deuxième code d'authentification a été obtenu.

4. Appareil de commande de communication selon l'une quelconque des revendications 1 à 3, dans lequel :
le récepteur (13) reçoit en outre, à partir d'un troisième noeud (40b), des données comprenant les deuxièmes informations d'identification ou des troisièmes informations d'identification ;
les données comprenant les deuxièmes informations d'identification comprennent une valeur qui indique des informations d'identification comme une cible de détermination pour laquelle le fait d'interrompre le processus doit être déterminé ; et
le dispositif de commande (20)
stocke le premier code d'authentification en association avec les premières informations d'identification, génère un troisième code d'authentification en utilisant des quatrièmes données comprenant les troisièmes informations d'identification et stocke le troisième code d'authentification en association avec les troisièmes informations d'identification,
reconnaît les premières informations d'identification comme la cible de détermination et effectue une comparaison entre un quatrième code d'authentification au sein des cinquièmes données et le premier code d'authentification quand le récepteur a reçu les cinquièmes données, dans lesquelles les premières informations d'identification sont associées au quatrième code d'authentification calculé par le premier noeud, en utilisant les deuxièmes informations d'identification,
reconnaît les troisièmes informations d'identification comme la cible de détermination et effectue une comparaison entre un cinquième code d'authentification au sein des sixièmes données et le troisième code d'authentification quand le récepteur a reçu les sixièmes données, dans lesquelles les troisièmes informations d'identification sont associées au cinquième code d'authentification calculé par le troisième noeud, en utilisant les deuxièmes informations d'identification, et
détermine s'il faut interrompre le processus en utilisant un résultat de la comparaison.

5. Procédé de commande de communication pour effectuer une commande de communication parmi une pluralité de noeuds, le procédé comprenant :
la réception (s2), à partir d'un premier noeud (40), de premières données comprenant des premières informations d'identification, les premières informations d'identification identifiant des données adressées à un deuxième noeud (60) qui n'exécute pas un processus pour détecter une attaque par rejeu et qui ne reçoit pas une trame comprenant un code d'authentification ;
la génération (s3) d'un premier code d'authentification en utilisant les premières données reçues ;
la réception (s5), à partir du premier noeud (40), de deuxièmes données comprenant des deuxièmes informations d'identification et un deuxième code d'authentification que le premier noeud a généré en utilisant les premières données, les deuxièmes informations d'identification identifiant des données qui ne sont pas reçues par le deuxième noeud, le premier noeud et le deuxième noeud étant connectés à un réseau local de commande, CAN ;
l'exécution d'une comparaison (s6) entre le premier code d'authentification et le deuxième code d'authentification pour vérifier si l'attaque par rejeu a eu lieu ; et
le fait de déterminer (s7) s'il faut amener le deuxième noeud à interrompre un processus des données rapportées en utilisant les premières informations d'identification, sur la base d'un résultat de la comparaison ;
dans lequel les premiers codes d'authentification sont générés en utilisant les premières données et une première valeur de compteur d'un premier compteur dans un appareil de commande de communication (10) et les deuxièmes codes d'authentification sont générés en utilisant les premières données et une deuxième valeur de compteur d'un deuxième compteur dans le premier noeud (4),
dans lequel une valeur initiale commune est donnée au premier compteur et au deuxième compteur et lesdites valeurs de compteur sont respectivement différentes pour chaque trame.

6. Procédé de commande de communication selon la revendication 5, dans lequel
des troisièmes données sont utilisées en outre pour générer le premier code d'authentification (s121), quand les troisièmes données ont été reçues par le premier noeud (40) conjointement aux premières informations d'identification dans une période de temps d'une réception des première données à une réception des deuxièmes données,
le deuxième code d'authentification est généré (s124) à partir des données que le premier noeud a transmises en utilisant les premières informations d'identification dans une période de temps d'une transmission des première données à une transmission des deuxièmes données, et
le deuxième noeud est amené à interrompre le processus des données rapportées en utilisant les premières informations d'identification, quand le premier code d'authentification et le deuxième code d'authentification ne correspondent pas (s129).

7. Procédé de commande de communication selon la revendication 6, dans lequel
le deuxième noeud est amené à interrompre le processus des données rapportées en utilisant les premières informations d'identification, quand le nombre d'éléments de données utilisés pour générer le premier code d'authentification et une valeur prédéterminée comme le nombre de transmissions de données transmises en utilisant les premières informations d'identification jusqu'à ce que le premier noeud transmette les deuxièmes données ne correspondent pas en un point temporel où le deuxième code d'authentification a été obtenu (s151, s154).

8. Procédé de commande de communication selon l'une quelconque des revendications 5 à 7, comprenant en outre :
le stockage (s65) du premier code d'authentification en association avec les premières informations d'identification ;
la génération (s72) d'un troisième code d'authentification en utilisant des quatrièmes données et le stockage du troisième code d'authentification en association avec les troisièmes informations d'identification, quand les quatrièmes données comprenant les troisièmes informations d'identification ont été reçues à partir d'un troisième noeud ;
l'exécution d'une comparaison (s77) entre un quatrième code d'authentification au sein des cinquièmes données et le premier code d'authentification, quand les cinquièmes données, dans lesquelles les premières informations d'identification sont associées au quatrième code d'authentification calculé par le premier noeud, ont été reçues en utilisant les deuxièmes informations d'identification ;
l'exécution d'une comparaison (s81) entre un cinquième code d'authentification au sein des sixièmes données et le troisième code d'authentification, quand les sixièmes données, dans lesquelles les troisièmes informations d'identification sont associées au cinquième code d'authentification calculé par le troisième noeud, ont été reçues en utilisant les deuxièmes informations d'identification ; et
le fait de déterminer s'il faut interrompre le processus en utilisant un résultat de la comparaison.

9. Programme de commande de communication pour amener un appareil de commande de communication à effectuer une commande de communication parmi une pluralité de noeuds, pour exécuter un processus comprenant :
la réception (s2), à partir d'un premier noeud, de premières données comprenant des premières informations d'identification, les premières informations d'identification identifiant des données adressées à un deuxième noeud (60) qui n'exécute pas un processus pour détecter une attaque par rejeu et qui ne reçoit pas une trame comprenant un code d'authentification ;
la génération (s3) d'un premier code d'authentification en utilisant les premières données reçues ;
la réception (s5), à partir du premier noeud, de deuxièmes données comprenant des deuxièmes informations d'identification et un deuxième code d'authentification que le premier noeud a généré en utilisant les premières données, les deuxièmes informations d'identification identifiant des données qui ne sont pas reçues par le deuxième noeud, le premier noeud et le deuxième noeud étant connectés à un réseau local de commande, CAN ;
l'exécution d'une comparaison (s6) entre le premier code d'authentification et le deuxième code d'authentification pour vérifier si l'attaque par rejeu a eu lieu ; et
le fait de déterminer (S7) s'il faut amener le deuxième noeud à interrompre un processus des données rapportées en utilisant les premières informations d'identification, sur la base d'un résultat de la comparaison ;
dans lequel les premiers codes d'authentification sont générés en utilisant les premières données et une première valeur de compteur d'un premier compteur dans l'appareil de commande de communication (10) et les deuxièmes codes d'authentification sont générés en utilisant les premières données et une deuxième valeur de compteur d'un deuxième compteur dans le premier noeud (40),
dans lequel une valeur initiale commune est donnée au premier compteur et au deuxième compteur et lesdites valeurs de compteur sont respectivement différentes pour chaque trame.

10. Programme de commande de communication selon la revendication 9, dans lequel le processus comprend en outre :
l'utilisation en outre des troisièmes données de manière à générer le premier code d'authentification (s121), quand les troisièmes données ont été reçues à partir du premier noeud (40) conjointement aux premières informations d'identification dans une période de temps d'une réception des premières données à une réception des deuxièmes données ;
la génération (s124) du deuxième code d'authentification à partir des données que le premier noeud a transmises en utilisant les premières informations d'identification dans une période de temps d'une transmission des première données à une transmission des deuxièmes données ; et
le fait d'amener le deuxième noeud à interrompre (s129) le processus des données rapportées en utilisant les premières informations d'identification, quand le premier code d'authentification et le deuxième code d'authentification ne correspondent pas.

11. Programme de commande de communication selon la revendication 10, dans lequel le processus comprend en outre
le fait d'amener le deuxième noeud à interrompre (s154) le processus des données rapportées en utilisant les premières informations d'identification, quand le nombre d'éléments de données utilisés pour générer le premier code d'authentification et une valeur prédéterminée comme le nombre de transmissions de données transmises en utilisant les premières informations d'identification jusqu'à ce que le premier noeud transmette les deuxièmes données ne correspondent pas en un point temporel où le deuxième code d'authentification a été obtenu.

12. Programme de commande de communication selon l'une quelconque des revendications 9 à 11, dans lequel le processus comprend en outre :
le stockage (s65) du premier code d'authentification en association avec les premières informations d'identification ;
la génération (s72) d'un troisième code d'authentification en utilisant des quatrièmes données et le stockage du troisième code d'authentification en association avec les troisièmes informations d'identification, quand les quatrièmes données comprenant les troisièmes informations d'identification ont été reçues à partir d'un troisième noeud ;
l'exécution d'une comparaison (s77) entre un quatrième code d'authentification dans lequel des cinquièmes données et le premier code d'authentification, quand les cinquièmes données, dans lesquelles les premières informations d'identification sont associées au quatrième code d'authentification calculé par le premier noeud, ont été reçues en utilisant les deuxièmes informations d'identification ;
l'exécution d'une comparaison (s81) entre un cinquième code d'authentification dans lequel des sixièmes données et le premier code d'authentification quand les sixièmes données, dans lesquelles les troisièmes informations d'identification sont associées au cinquième code d'authentification calculé par le troisième noeud, ont été reçues en utilisant les deuxièmes informations d'identification ; et
le fait de déterminer s'il faut interrompre le processus en utilisant un résultat de la comparaison.
